(19) **Europäisches Patentamt / European Patent Office / Office européen des brevets**

(11) **EP 3 152 903 B1**

(12) **FASCICULE DE BREVET EUROPEEN**

(45) Date de publication et mention de la délivrance du brevet:
**11.11.2020 Bulletin 2020/46**

(21) Numéro de dépôt: **15767201.5**

(22) Date de dépôt: **09.07.2015**

(51) Int Cl.:
*H04N 19/126* (2014.01)   *H04N 19/635* (2014.01)
*H04N 19/42* (2014.01)

(86) Numéro de dépôt international:
**PCT/FR2015/000141**

(87) Numéro de publication internationale:
**WO 2015/185810 (10.12.2015 Gazette 2015/49)**

(54) **PRÉCISION ADAPTATIVE ET QUANTIFICATION D'UNE MATRICE TRANSFORMÉE PAR ONDELETTES**

ADAPTIVE GENAUIGKEIT UND QUANTIFIZIERUNG EINER TRANSFORMIERTEN WAVELETMATRIX

ADAPTIVE PRECISION AND QUANTIFICATION OF A WAVELET TRANSFORMED MATRIX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.06.2014 FR 1401280**

(43) Date de publication de la demande:
**12.04.2017 Bulletin 2017/15**

(73) Titulaire: **Colin, Jean-Claude
78000 Versailles (FR)**

(72) Inventeurs:
  • **GERVAIS, Than Marc-Eric
    75015 Paris (FR)**
  • **LOUBET, Bruno
    75009 Paris (FR)**
  • **BESSOU, Nicolas
    78500 Sartrouville (FR)**
  • **GUIMIOT, Yves
    64100 Bayonne (FR)**
  • **PETITFILS, Mickael
    93190 Livry - Gargan (FR)**
  • **ROQUES, Sebastien
    75013 Paris (FR)**

(56) Documents cités:
**US-A1- 2006 039 626**

  • **CHANG-HOON SON ET AL: "Low complexity embedded compression algorithm for reduction of memory size and bandwidth requirements in the JPEG2000 encoder", IEEE TRANSACTIONS ON CONSUMER ELECTRONICS, IEEE SERVICE CENTER, NEW YORK, NY, US, vol. 56, no. 4, 1 novembre 2010 (2010-11-01), pages 2421-2429, XP011341842, ISSN: 0098-3063, DOI: 10.1109/TCE.2010.5681123**
  • **CHRISTOPOULOS C ET AL: "THE JPEG2000 STILL IMAGE CODING SYSTEM: AN OVERVIEW", IEEE TRANSACTIONS ON CONSUMER ELECTRONICS, IEEE SERVICE CENTER, NEW YORK, NY, US, vol. 46, no. 4, 1 novembre 2000 (2000-11-01), pages 1103-1127, XP001059899, ISSN: 0098-3063, DOI: 10.1109/30.920468**
  • **Anonymous: "Fixed-point arithmetic - Wikipedia", , 26 May 2017 (2017-05-26), XP055453455, Retrieved from the Internet: URL:https://en.wikipedia.org/w/index.php?t itle=Fixed-point_arithmetic&oldid=78234421 7 [retrieved on 2018-02-22]**

**Description**

La présente invention se rapporte au domaine du codage de matrices ; elle est notalmnent applicable au codage de media, particulièrement de media image ou vidéo, sous forme de fichiers numériques. Elle se rapporte plus particulièrement à un procédé pour réduire l'entropie de ces fichiers, telle que définie par la formule de Shannon, définie ci-dessous.

L'entropie de Shannon définit la «quantité» d'information présente dans un signal, et donne donc une indication précise de la quantité de bits nécessaire pour coder ce signal à l'aide de techniques de codage binaire telles que le codage arithmétique ou le codage de Huffman. Plus les valeurs sont répétitives et réparties régulièrement dans le signal, plus l'entropie de ce signal est faible. La formule générale de calcule de l'entropie est la suivante :

$$H(X) = \mathrm{H2(X)} = -\sum_{i=1}^{n} Pi \log_2 Pi.$$

où Pi représente la probabilité d'apparition de chaque symbole

Il résulte de cela qu'une façon de réduire le poids (en nombre de bits) d'un fichier numérique est de réduire son entropie.

Les transformées par ondelettes sont utilisées pour réduire le poids des fichiers numériques. C'est notamment le cas de certains formats de compression d'images numériques, tel le jpeg2000.

Le document CHANG-HOON SON ET AL: "Low complexity embedded compression algorithm for reduction of memory size and bandwidth requirements in the JPEG2000 encoder",IEEE TRANSACTIONS ON CONSUMER ELECTRONICS, IEEE SERVICE CENTER, NEW YORK, NY, US, vol. 56, no. 4, 1 novembre 2010 (2010-11-01), pages 2421-2429, révèle une implémentation de JPEG2000 en arithmétique à virgule fixe.

La transformation en ondelette d'une matrice consiste à diviser cette matrice en une matrice dite d'approximation ou matrice L, et une matrice dite de détails ou matrice H. Chacune de ces matrices contient environ moitié moins de valeurs que la matrice d'origine. La matrice d'approximation L correspond à une «image réduite» de la matrice d'origine, et la matrice de détails H correspond aux détails enlevés pour réduire la taille de la matrice.

Dans le cadre des transformations par ondelettes en deux dimensions, il est possible d'utiliser la transformation par ondelettes horizontalement ou verticalement. Usuellement, la transformation est effectuée dans un sens (par exemple, verticalement) pour obtenir une matrice d'approximation de type L et une matrice de détails de type H, puis dans le sens inverse (par exemple, horizontalement) sur chacune des matrices de type L et H. L'application de cette seconde transformée sur la matrice d'approximation de type L génère une matrice d'approximation de type LL et une matrice de détails de type LH. L'application de cette seconde transformée sur la matrice de détails de type H génère deux matrices de détails de type HL et de type HH. On appellera par la suite niveau d'ondelettes l'application successive de transformations dans les deux sens pour obtenir une matrice d'approximation LL et trois matrices de détails HL, LH et HH comme expliqué ci-dessus.

Lors de l'utilisation d'ondelettes pour la compression image en deux dimensions, à l'issue de chaque niveau, les matrices de détails de type LH, HL et HH sont usuellement quantifiées pour réduire leur entropie, alors qu'un nouveau niveau d'ondelettes peut être appliqué à la matrice de type LL. Il est ainsi possible d'appliquer autant de niveaux que nécessaire sur les matrices d'approximation de type LL successives.

Le jpeg2000 utilise en outre une quantification scalaire à zone morte. Certaines transformées par ondelettes sont sans perte ; cependant, l'application d'une quantification à chaque niveau d'ondelette conduit à des erreurs d'arrondis qui se cumulent à mesure que l'on avance dans les niveaux successifs, d'abord lors de la compression, puis lors de la restitution des fichiers numériques compressés. Ce problème d'arrondi ne se pose que lorsque les matrices de détail type LH, HL, HH associées au niveau sont quantifiées. Le but de l'invention est donc de fournir un procédé pour réduire les erreurs d'arrondis lors de la compression d'un fichier numérique lors de l'utilisation d'une transformée par ondelettes.

Dans le texte présent, par mesure de simplification, sauf indication contraire, les valeurs numériques seront écrites en base 10, bien que les opérations soient prévues pour être effectuées sur les valeurs binaires. Lorsque les valeurs sont écrites en base 2, elles sont clairement indiquées comme telles ; ainsi, 1000 en base 2 serait noté $(1000)_2$.

Un procédé selon l'invention, pour réduire l'entropie d'une matrice d'origine est mentionné dans la revendication 1.

De préférence, le coefficient de quantification de chacune des sous-matrices de détail d'un niveau d'ondelettes est inférieur ou égal à celui de la matrice de détails équivalente du niveau précédent. Il est aussi, de préférence, un quantificateur scalaire uniforme, c'est-à-dire unique pour chaque matrice de détails, quelle que soit la valeur divisée.

A l'issue du traitement d'un niveau d'ondelettes en nombres à virgules fixes, les valeurs des sous-matrices de détail peuvent être quantifiées selon chacun de leurs coefficients de quantification puis transformés en nombres entiers, c'est-à-dire en abandonnant les digits utilisés pour le calcul en virgule fixe. A l'issue de ce traitement d'un niveau d'ondelettes en nombres à virgules fixes, si un nouveau niveau d'ondelettes est appliqué à la matrice d'approximation, les valeurs de ladite matrice d'approximation peuvent être transformées en nombres entiers si chacun des coefficients de quantification de chacune des matrices de détails du niveau d'ondelettes suivant est égal à 1, et être conservées en nombres à virgule fixe dans le cas contraire. A la fin du dernier niveau, la dernière matrice d'approximation de type LL est transformée en nombre entier si le dernier niveau est traité en virgule fixe.

Si au moins un des coefficients de quantification de chacune des matrices de détail du premier niveau est supérieur à 1, toutes les valeurs de la matrice d'origine sont avantageusement transformées en nombres à virgules fixes avant le calcul du premier niveau de transformation en ondelettes.

Si la matrice d'origine traitée est issue d'une transformation colorimétrique en nombres à virgules fixes avec une précision supérieure au premier nombre de digits, les nombres à virgules fixes s'obtiennent de préférence en diminuant le nombre de digits pour obtenir ledit premier nombre.

Pour calculer une matrice restaurée, à partir de la matrice transformée le procédé comprend avantageusement une transformation par ondelettes inverse de la matrice transformée, le calcul de ladite transformée par ondelettes inverse étant effectué en nombre à virgule fixe en utilisant un deuxième nombre de digits au moins égal à 1 après la virgule, au moins pour chaque niveau d'ondelettes pour lequel au moins un des coefficients de quantification des matrices de détail de ce niveau est strictement supérieur à 1.

Lors de la transformation inverse d'un niveau d'ondelettes traité en nombres à virgule fixe, les valeurs des matrices de détail peuvent être converties en nombres à virgules fixes et dé-quantifiées avant la transformation en ondelettes inverse. De même, si la matrice d'approximation de ce niveau est en entier, elle sera convertie en virgules fixes avant d'effectuer le niveau d'ondelettes inverse, qui donnera la matrice d'approximation restaurée qui sera utilisée au niveau suivant.

La matrice restaurée est avantageusement obtenue en effectuant les transformations par ondelettes inverses, les dé-quantifications et les conversions entre nombres entiers et virgules fixes sur l'ensemble des niveaux disponibles.

La matrice restaurée intermédiaire peut avantageusement être obtenue en effectuant les transformations par ondelettes inverses, les dé-quantifications et les conversions entre nombres entiers et virgules fixes sur un nombre de niveaux inférieur au nombre total de niveaux disponibles. Si le niveau d'ondelettes correspondant à la dernière transformation en ondelettes inverse effectuée est traité en nombres à virgules fixes, les nombres de la matrice restaurée intermédiaire obtenue sont de préférence des nombres à virgule fixe avec une précision comprenant un nombre de digits égal au deuxième nombre de digits après la virgule. Pour le traitement ultérieur de la matrice restaurée intermédiaire, chacune des valeurs de cette matrice restaurée peuvent être transformée en nombre entier.

Si toutes les données compressées ne sont pas disponibles, on peut utiliser la matrice restaurée intermédiaire avec un nombre de niveaux correspondant aux niveaux dont l'ensemble des données est disponible. De même, pour une application nécessitant une résolution inférieure à celle de la matrice restaurée, on peut utiliser la matrice restaurée intermédiaire avec le nombre de niveau le plus petit permettant d'atteindre au moins ladite résolution inférieure.

Si le premier niveau d'ondelettes est traité en nombres à virgules fixes, les nombres de la matrice restaurée obtenue peuvent être des nombres à virgule fixe avec une précision comprenant un nombre de digits égal au deuxième nombre de digits après la virgule.

Pour le traitement ultérieur de la matrice ainsi restaurée, chacune des valeurs de ladite matrice restaurée peut être transformée en nombre entier. La transformée par ondelette inverse peut être suivie par une transformée colorimétrique inverse en nombres à virgule fixe avec un nombre de digit supérieur à celui utilisé pour la transformée par ondelette inverse.

Pour réaliser le calcul à virgule fixe on peut décaler vers la gauche chaque valeur de la matrice de D digit. On peut alternativement multiplier chaque valeur de la matrice par 10, en base 2, élevé à la puissance D, c'est à dire par : $(10^D)_2$.

Lorsqu'on a fini les calculs en virgule fixe, de préférence, on décale vers la droite chaque valeur de la matrice du nombre D de digits ou on multiplie chaque valeur de la matrice par 10, en base 2, élevé à la puissance -D, c'est à dire par : $(10^{-D})_2$.

Pour restaurer la matrice d'origine en une matrice restaurée à partir de la matrice transformée, le calcul de la transformée inverse par ondelettes est de préférence fait en virgule fixe, en utilisant un deuxième nombre de digits au moins égal à 1 après la virgule, au moins pour chaque niveau d'ondelettes ayant au moins une matrice de détails ayant un coefficient de quantification supérieur à 1. Le premier et le deuxième nombre de digits peuvent être identiques.

La matrice d'origine peut représenter, au moins partiellement, une image, par exemple représenter l'une des composantes Y, Cb et Cr de l'image. De préférence, préalablement au calcul de la transformée par ondelettes on conserve les D premiers digits résultant de la transformée YCbCr. Avantageusement, la transformée YCbCr peut être effectuée avec une précision supérieure à D digits. Dans ce cas, la précision des données est réduite pour être ramenée à D digits.

La transformée par ondelettes peut être une transformée de Cohen-Daubechies-Feauveau (CDF) 5/3 avec procédé d'élévation (lifting scheme, en anglais).

Plusieurs modes d'exécution de l'invention seront décrits ci-après, à titre d'exemples non limitatifs, en référence aux dessins annexés dans lesquels :

- la figure 1 illustre un exemple d'image noir et blanc d'origine, formant une matrice de soixante-quatre pixels répartis en huit lignes de huit pixels chacune;

- la figure 2A illustre une matrice représentant l'image de la figure 1, dans laquelle chaque cellule contient une valeur littérale pour la luminance du pixel, indicée par la position de la cellule dans la matrice ;

- la figure 2B illustre la même matrice d'origine X, dans laquelle chaque cellule contient une valeur numérique d'origine, comprise entre 0 et 255, représentative de la luminance d'un pixel correspondant de l'image d'origine ;

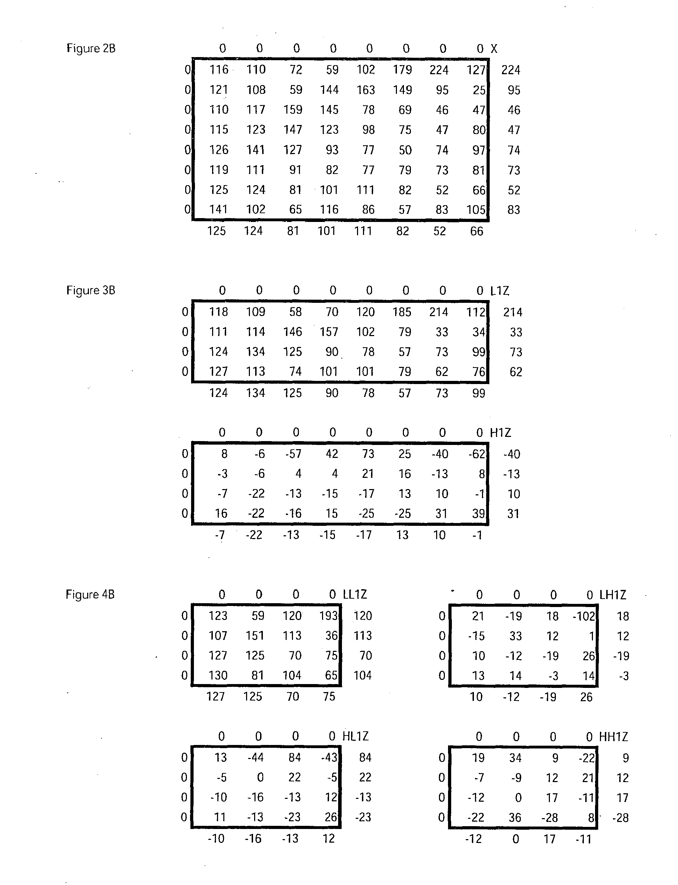

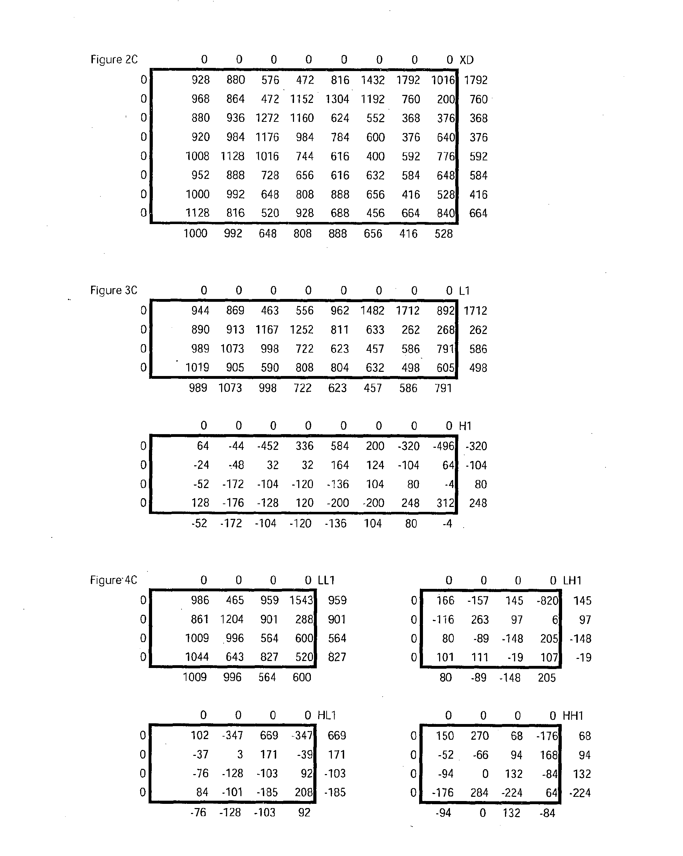

- les figures 2B, 3B, 4B, 5B, 6B; 7B 8B, 9B, 10B, 11B, 12B, 13B et 14B illustrent un procédé de l'art antérieur et les figures 2C, 3C, 4C, 5C, 6C; 7C, 8C, 9C, 10C, 11C, 12C, 13C, 14C et 15C illustrent un procédé selon l'invention ;

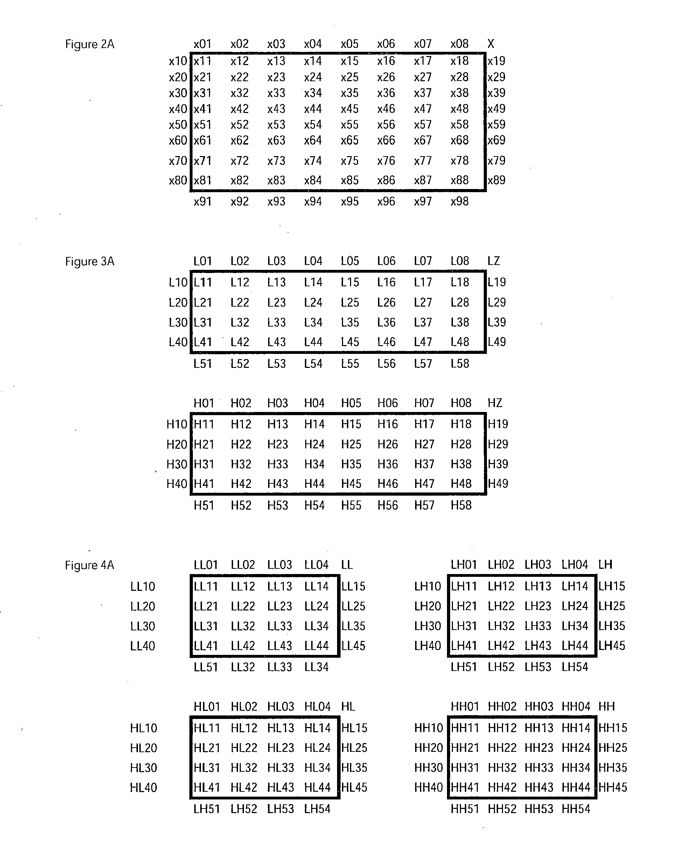

- les figures 3A et 3B illustrent respectivement les sous-matrices de valeurs littérales et numériques à l'issue d'une première étape de calcul du premier niveau d'ondelettes, qui consiste en une transformation par ondelettes verticale, appliqué aux valeurs de la matrice de la figure 2B dans le procédé de l'art antérieur ;

- les figures 4A et 4B illustrent respectivement les sous-matrices de valeurs littérales et numériques obtenues lors d'une deuxième étape de calcul du premier niveau d'ondelettes, qui consiste en une transformation par ondelettes horizontale, appliqué aux valeurs numériques de chacune des sous-matrices de la figure 3B dans le procédé de l'art antérieur ;

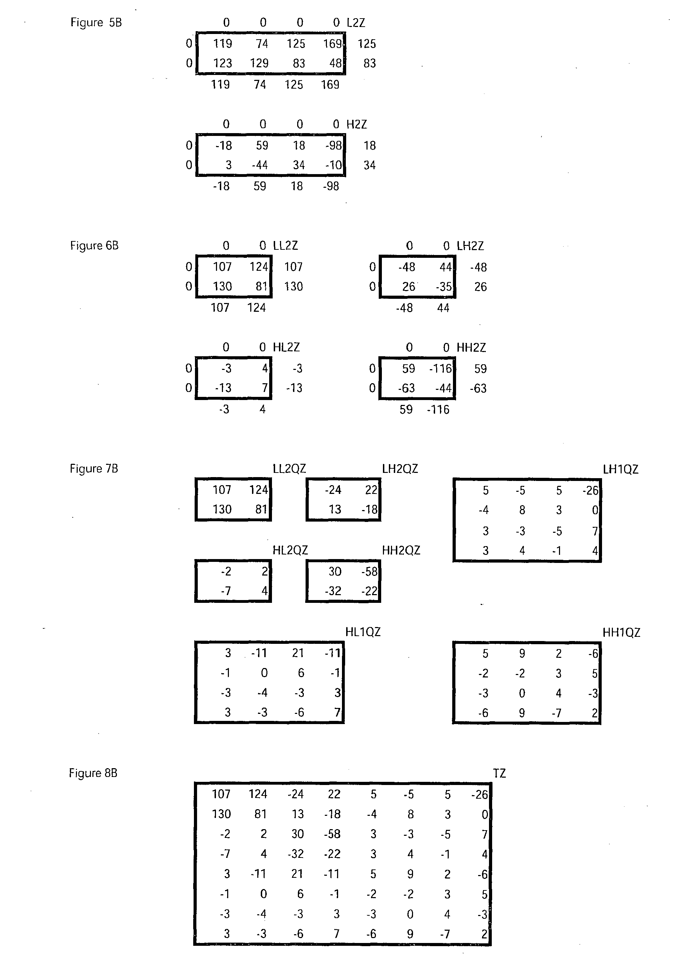

- les figures 5B et 6B illustrent les sous-matrices obtenues respectivement après une transformation par ondelettes verticale, puis une transformation par ondelette horizontale, lors du calcul du deuxième niveau d'ondelettes dans le procédé de l'art antérieur;

- La figure 7B illustre la quantification des sous-matrices, et représente donc l'ensemble des sous-matrices à l'issue de la transformation selon l'état de l'art antérieur ;

- La figure 8B illustre la concaténation des valeurs transformées et quantifiées par l'état de l'art antérieur au sein d'une matrice de même taille que la matrice d'origine ;

- la figure 2C illustre une étape préalable de décalage vers la gauche des valeurs de la matrice de la figure 2B, dans un procédé selon l'invention ;

- les figures 3A et 3C illustrent respectivement les sous-matrices de valeurs littérales et numériques obtenues lors d'une première étape de calcul du premier niveau d'ondelettes, consistant en une transformation par ondelettes verticale appliquée aux valeurs de la matrice d'origine X illustrée à la figure 2B dans un procédé selon l'invention;

- les figures 4A et 4C illustrent respectivement les sous-matrices de valeurs littérales et numériques obtenues lors d'une deuxième étape de calcul du premier niveau d'ondelettes, consistant en une transformation par ondelettes horizontale appliquée aux valeurs numériques des sous-matrices L1 et H1 illustrées à la figure 3C dans un procédé selon l'invention ;

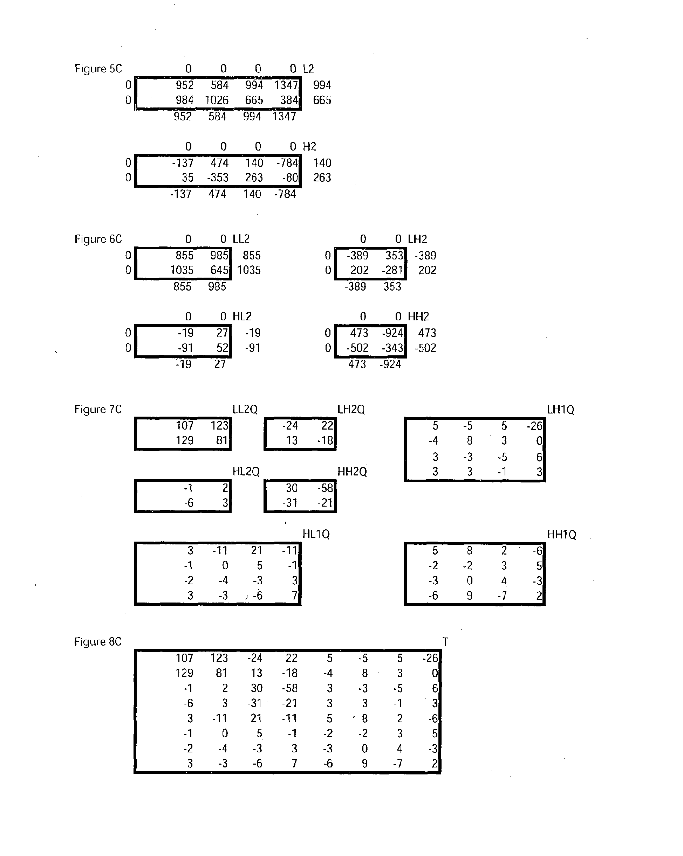

- les figures 5C et 6C illustrent respectivement les sous-matrices obtenues après la première étape consistant en une transformation par ondelettes verticale et la deuxième étape consistant en une transformation par ondelettes horizontale, lors du calcul du deuxième niveau d'ondelettes dans un procédé selon l'invention;

- La figure 7C illustre la quantification des sous-matrices transformées, et représente donc l'ensemble des sous-matrices à l'issue de la transformation dans un procédé selon l'invention ;

- La figure 8C illustre la concaténation des valeurs transformées et quantifiées dans un procédé selon l'invention au sein d'une matrice de même taille que la matrice d'origine ;

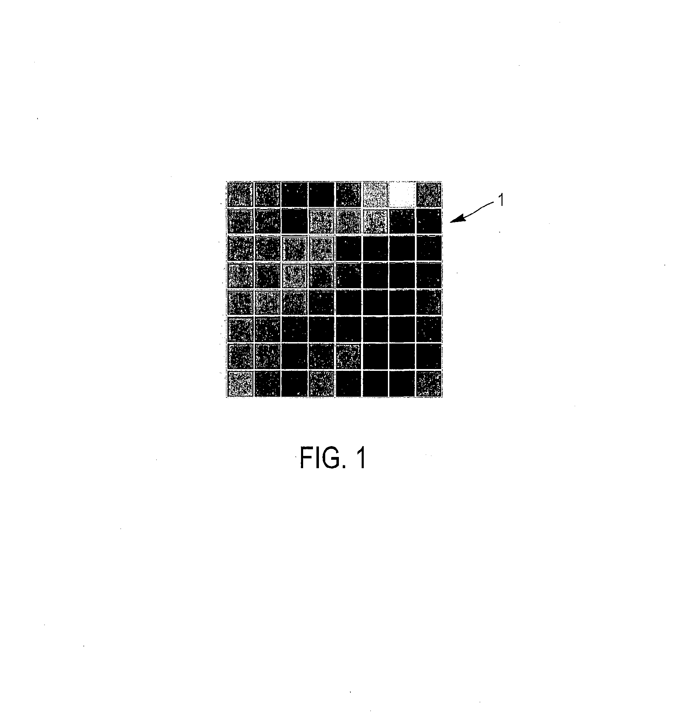

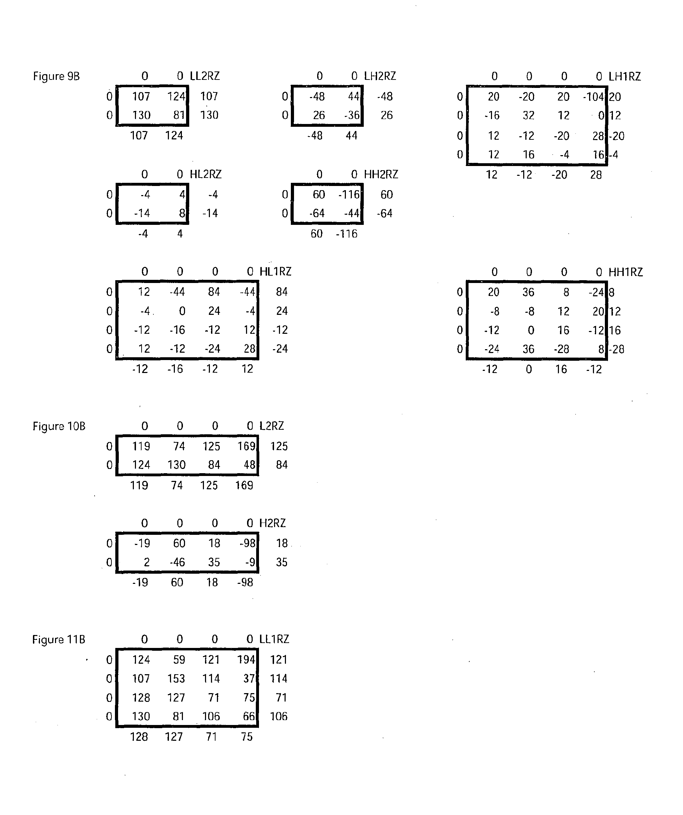

- les figures 10B, 11B, 12B et 13B illustrent différentes étapes pour la restitution de la matrice XRZ illustrant les luminances restaurées des pixels de l'image de la figure 1;

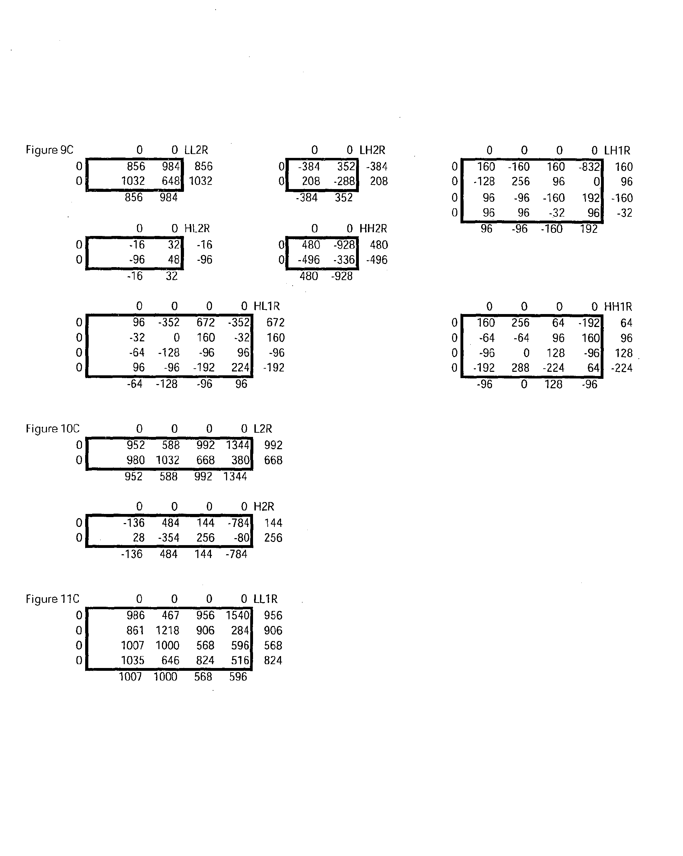

- les figures 10C, 11C, 12C, 13C, et 14C illustrent différentes étapes pour la restitution de la matrice XR illustrant les luminances restaurées des pixels de l'image de la figure 1 ;

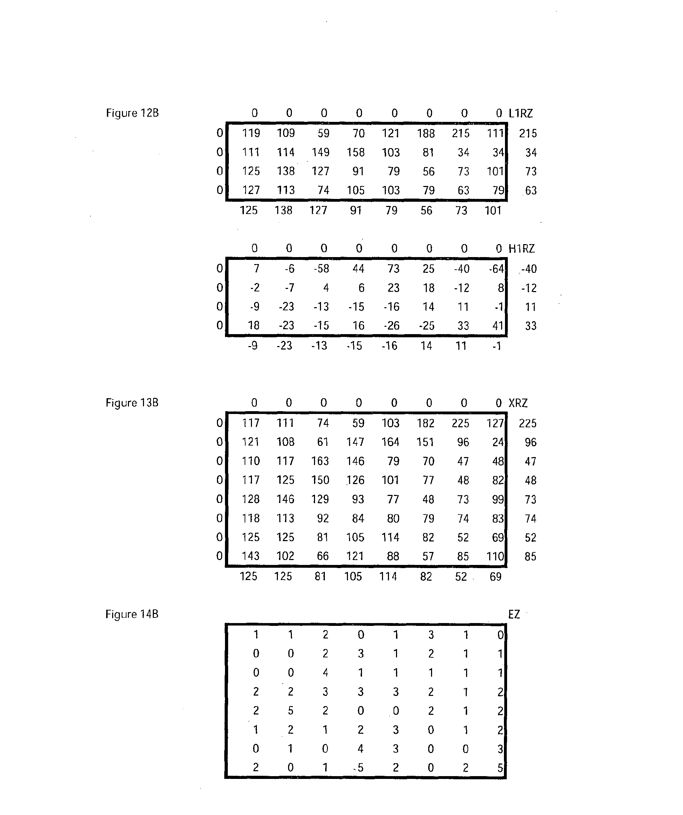

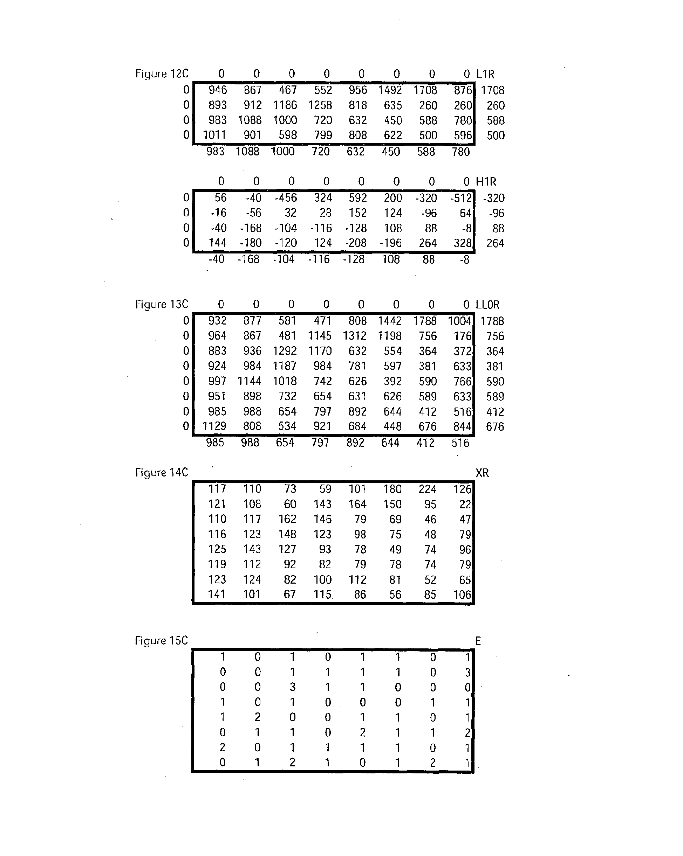

- les figures 14B et 15C illustrent les matrices d'erreurs, respectivement dans le procédé de l'art antérieur et dans le procédé selon l'invention; dont chaque cellule comprend la différence entre la valeur restaurée et la valeur d'origine correspondante.

La description d'un procédé selon l'invention va être faite dans le domaine de la compression des images numériques. Ainsi, la figure 1 illustre une image d'origine en noir et blanc constituant une matrice image de 8 lignes et 8 colonnes.

La figure 2A illustre la matrice X représentant les valeurs de luminances des pixels de l'image d'origine, chaque cellule de la matrice disposée à l'intersection d'une ligne horizontale i (si après, ligne) et d'une ligne verticale j (ci-après, colonne) comprend une valeur littérale xij représentant la luminance d'un pixel situé, dans l'image d'origine, sur la même ligne i et la même colonne j.

La figure 2B illustre la même matrice X, dans laquelle chaque valeur littérale a été remplacée par la valeur numérique correspondante pour l'image d'origine 1. Ces valeurs sont codées en entiers non signés sur 8bits, c'est-à-dire entre 0 et 255. A titre d'exemple la valeur du pixel le plus sombre est $x_{28}=25$ et celle du plus clair est $x_{17}=224$. L'application de la formule de calcul de l'entropie donne une entropie de 5,625 pour cette matrice.

La transformée par ondelettes utilisée dans les exemples qui vont suivre est une transformée de Cohen-Daubechies-Feauveau (CDF) 5/3 avec procédé d'élévation (lifting scheme, en anglais). Celle-ci ne diffère des ondelettes utilisées dans le Jpeg2000 c'est à dire CDF 5/3 sans perte (lossless) et CDF 9/7 avec pertes (lossy), que par le nombre de valeurs adjacentes utilisées pour les détails et les facteurs associés.

Les ondelettes de type CDF 5/3 peuvent être appliquée à une matrice Y dont les valeurs sont indicées comme défini plus haut.

Une étape d'ondelettes verticales s'obtient avec les équations suivantes :

Calcul de la matrice de détails :

$$h_{m,n} = y_{2m,n} - [\, y_{2m-1,n} + y_{2m+1,n} \,] / 2$$

pour tout m compris entre 1 et la moitié de la hauteur de Y, pour tout n sur la largeur de Y. Par exemple, on obtient la matrice H1Z à partir d'origine X (voir figure 3B).

Calcul de la matrice d'approximation :

$$l_{mn} = y_{2m-1,n} + [\, h_{m-1,n} + h_{m,n} \,] / 4$$

pour m inférieur ou égal à la moitié de la hauteur de Y, + 1 si la hauteur de Y est impaire, pour tout n sur la largeur de Y. A titre d'exemple, on obtient la matrice L1Z à partir des matrices d'origine X et H1Z (voir figure 3B).

Une étape d'ondelettes horizontale s'obtient avec les équations suivantes :

Calcul de la matrice de détails :

$$h_{m,n} = y_{m,2n} - [\, y_{m,2n-1} + y_{m,2n+1} \,] / 2$$

pour tout n compris entre 1 et la moitié de la largeur de Y, pour tout m sur la hauteur de Y. A titre d'exemple, on obtient HH1Z à partir de H1Z, et on obtient LH1Z à partir de L1Z.

Calcul de la matrice d'approximation :

$$l_{mn} = y_{m,2n-1} + [\, h_{m,n-1} + h_{m,n} \,] / 4$$

pour n inférieur ou égal à la moitié de la largeur de Y, + 1 si la largeur de Y est impaire, pour tout m sur la hauteur de Y. A titre d'exemple, on obtient HL1Z à partir de H1Z et de HH1Z, et on obtient LL1Z à partir de L1Z et de LH1Z.

Chaque valeur est systématiquement arrondie à l'entier à la fin d'un calcul. Dans les exemples qui vont suivre, la règle suivante a été adoptée pour les arrondis : arrondi selon la règle définie plus haut, 0.5étant arrondi à 1 et -0.5 à -1. Ainsi, 2,49 sera arrondi à 2, 2,5 à 3 et 2,3 à 2.

Afin de permettre le calcul de certaines lignes et colonnes au bord des matrices, des valeurs virtuelles qui ne sont pas traitées en elles-mêmes mais permettent de traiter les autres sont ajoutées selon les règles suivantes :

- Les valeurs virtuelles situées juste au-dessus et juste à gauche de chacune des matrices et de chacune des matrices restaurées sont nulles. Ainsi, la matrice de détails H1Z illustrée en figure 3B pourra avoir parmi ses valeurs virtuelles $H1Z_{01} = 0$ ou $H1Z_{08} = 0$. De la même manière, la matrice de détails restaurée H1RZ illustrée en figure 12B aura parmi ses valeurs virtuelles $H1RZ_{01} = 0$ ou $H1RZ_{08} = 0$, la matrice de détails LH1Z aura parmi ses valeurs virtuelles $LH1Z_{10} = 0$ ou $LH1Z_{40} = 0$, et la matrice de détails restaurée LH1RZ aura parmi ses valeurs virtuelles $LH1RZ_{10} = 0$ ou $LH1RZ_{40} = 0$.
- Les valeurs virtuelles situées juste à droite et juste au-dessous de chacune des matrices et de chacune des matrices restaurées sont respectivement égales à la valeur située deux cellules à gauche et deux cellules au-dessus. On aura ainsi parmi les valeurs virtuelles de X $x_{91} = x_{71}$, parmi celles de L1Z, $L1Z_{19} = L1Z_{17}$, parmi celles de L1RZ, $L1RZ_{19} = L1RZ_{17}$ et parmi celles de LL1RZ $LL1RZ_{51} = LL1RZ_{31}$.

Dans les exemples illustrés, on applique à chaque sous-matrice générée au niveau N d'ondelettes un facteur de quantification Q respectif, qui sera dans cet exemple le même pour chacune des matrices de détail d'un même niveau :

- pour le premier niveau N=N1=1, $Q=Q1=Q_{LH1}=Q_{HL1}=Q_{HH1}=4$ ;
- pour le deuxième niveau N=N2=2, $Q=Q2=Q_{LH2}=Q_{HL2}=Q_{HH2}=2$ ;

Les figures 3B et 4B illustrent l'application du premier niveau NI d'ondelettes à la matrice d'origine X, selon le procédé de l'art antérieur, avant application des facteurs de quantification.

Ainsi, les sous-matrices L1Z et H1Z, illustrées en figure 3B, chacune de quatre lignes de huit pixels, illustrées aux figures 3A et 3B, sont obtenues par l'application d'ondelettes verticales à la matrice d'origine X.

Ainsi, la transformée des premiers pixels x11 et x21 des deux premières lignes se fait selon le calcul suivant :

La valeur correspondante de la sous-matrice de détails H1Z est :

$$H1Z_{11} \ = x_{21} \ - (x11 + x31) \ / \ 2 \qquad = 121 - (116 + 110) \ / \ 2 \ = 8$$

La valeur correspondante de la sous-matrice d'approximation L1Z est :

$$L1Z_{11} \ = x_{11} + (H1Z_{01} + H1Z_{11}) \ / \ 4 \ \ = 116 + (0 + 8) \ / \ 4 \ = 118$$

La transformée des premiers pixels x31 et x41 des deux lignes suivantes se fait selon le calcul suivant :

La valeur correspondante de la sous-matrice H1Z est :

$$H1Z_{21} \ = x_{41} \ - (x_{31} + x_{51}) \ / \ 2 \quad = 115 - (110 + 126) \ / \ 2 \ = \text{-}3$$

La valeur correspondante de la sous-matrice L1Z est :

$$L1Z_{21} \ = x_{31} + (H1Z_{11} + H1Z_{21}) \ / \ 4 \ \ = 110 + (8 + (\text{-}3)) \ / \ 4 = 111$$

Des ondelettes horizontales sont ensuite appliquées à chacune des sous-matrices L1Z et H1Z, de sorte que l'on obtient respectivement, tel qu'illustré à la figure 4B :

- pour la sous-matrice L1Z, deux nouvelles sous-matrices LL1Z et LH1Z ; et,
- pour la sous-matrice H1Z, deux nouvelles sous-matrices HL1Z et HH1Z.

La figure 5B illustre le résultat de l'application d'une première étape d'un deuxième niveau N2 d'ondelettes à la sous-matrice LL1Z, obtenue précédemment ; il en résulte les deux sous-matrices L2Z et H2Z. La figure 6B illustre le résultat de l'application d'une deuxième étape de ce deuxième niveau d'ondelettes sur les matrices L2Z et H2Z, il en résulte les sous-matrices LL2Z, LH2Z, HL2Z et HH2Z de la figure 6B.

On peut alors soit re-faire un niveau, soit conserver la matrice LL2Z, soit la quantifier.

On choisit ici de conserver la matrice LL2Z identique sans appliquer de troisième niveau d'ondelettes.

La sous-matrice LL2Z sera donc conservée telle quelle, ne fera pas l'objet d'un nouveau niveau d'ondelettes et sera stockée sous la forme d'une matrice LL2QZ ayant des valeurs identiques.

On applique ensuite les quantifications respectives pour chaque niveau. Ainsi, on obtient les sous-matrices quantifiées LH1QZ, HL1QZ et HH1QZ en divisant respectivement chacune des valeurs des sous-matrices LH1Z, HL1Z et HH1Z par leurs facteurs de quantification $Q_{LH1}$, $Q_{HL1}$ et $Q_{HH1}$, égaux au facteur Q1 du premier niveau NI et en en prenant l'arrondi selon la règle définie plus haut. De même, on obtient les sous-matrices quantifiées LH2QZ, HL2QZ et HH2QZ en divisant respectivement chacune des valeurs des sous-matrices LH2Z, HL2Z et HH2Z par leurs facteurs de quantification $Q_{LH2Z}$, $Q_{HL2Z}$ et $Q_{HH2Z}$, égaux au facteur Q2 du deuxième niveau N2 et en en prenant l'arrondi selon la règle définie plus haut. L'ensemble de ces matrices quantifiées est illustré à la figure 7B.

La transformée TZ de la matrice X par la méthode de l'art antérieur est obtenue en transformant les valeurs de la matrice d'origine X en valeurs des sous-matrices LL2QZ, LH2QZ, HL2QZ, HH2QZ, LH1QZ, HL1QZ et HH1QZ. Ces nouvelles valeurs peuvent être stockées dans des emplacements spécifiques. Elles peuvent aussi se substituer aux valeurs de la matrice X pour former une matrice de même taille. La figure 8B illustre un exemple d'un tel placement de valeurs.

La diminution du nombre de valeurs différentes dans cette matrice transformée par rapport à la matrice d'origine permet d'augmenter la probabilité d'apparition de chacune d'entre elles. L'entropie de Shannon selon la formule précédente de cette nouvelle matrice est donc inférieure à celle de la matrice d'origine : elle est de 4,641.

On va maintenant décrire un procédé selon l'invention.

Un procédé selon l'invention consiste à conserver, durant le calcul de la transformée par ondelettes, D digits après la virgule (en notation binaire) soit D deuximales. Pour rendre le calcul plus rapide, plutôt que de l'effectuer en virgule flottante, il est effectué en virgule fixe. Pour ce faire, on peut multiplier chaque valeur de la matrice d'origine X par une coefficient de décalage égal à $2^D$, c'est à dire par $(10^D)_2$. On peut aussi décaler les valeurs, notées en binaire, de D digits vers la gauche. On ne conserve ensuite que la partie entière des valeurs augmentées ainsi obtenues, de sorte que les nombres manipulés sont des entiers dont les D derniers digits représentent les D deuximales et les autres digits représentent la partie entière du nombre d'origine.

Dans l'exemple illustré, on conserve trois digits. La matrice XD des valeurs augmentées est illustrée à la figure 2C. Chacune des valeurs XDij de la matrice XD est donc huit fois plus grande que les valeurs Xij de la matrice X d'origine:

$$XDij = 8 \text{ x } Xij$$

les valeurs binaires utilisées dans le calcul informatique ont donc été multipliées par $(1000)_2$, c'est-à-dire que le coefficient de décalage est égal à 8.

Par la même transformée utilisée précédemment pour obtenir la matrice transformée TZ, on obtient, à partir de la matrice augmentée XD, par une première application d'abord d'ondelettes verticales, les sous-matrices L1 et H1 illustrées à la figure 3C, puis d'ondelettes horizontale les sous matrices LL1, LH1, HL1 et HH1, illustrées à la figure 4C. On obtient ensuite, par une deuxième application à la sous-matrice LL1 d'ondelettes, d'abord verticales, les sous-matrices L2 et H2, illustrées à la figure 5C, puis horizontales, les sous-matrices LL2, LH2, HL2 et HH2, illustrées à la figure 6C.

On applique ensuite les quantifications respectives pour chaque niveau et on divise les valeurs obtenues par 8. On peut alternativement décaler de trois digits vers la droite les valeurs binaires obtenues après division par le facteur de quantification respectif.

Ainsi, on obtient les sous-matrices quantifiées LH1Q, HL1Q et HH1Q illustrées à la figure 7C en divisant respectivement chacune des valeurs des sous-matrices LH1, HL1 et HH1 par 8 fois leurs facteurs de quantification $Q_{LH1}$, $Q_{HL1}$ et $Q_{HH1}$, soit pour chaque matrice 8xQ1 et en prenant l'arrondi selon la règle définie plus haut. De même, on obtient les sous-matrices quantifiées LH2Q, HL2Q et HH2Q illustrées à la figure 7C en divisant respectivement chacune des valeurs des sous-matrices LH2, HL2 et HH2 par 8 fois leurs facteurs de quantification $Q_{LH2}$, $Q_{HL2}$ et $Q_{HH2}$, soit pour chaque matrice 8xQ2 et en prenant l'arrondi selon la règle définie plus haut. Enfin, la sous-matrice LL2Q illustrée à la figure 7C est obtenue en re-transformant la matrice LL2 en entier, donc en divisant les valeurs de la matrice LL2 par 8 et en prenant l'arrondi selon la règle définie plus haut. L'ensemble de ces matrices transformées est illustrée en figure 7C.

La transformée T de la matrice par le procédé selon l'invention est obtenue en transformant les valeurs de la matrice d'origine X en valeurs des sous-matrices LL2Q, LH2Q, HL2Q, HH2Q, LH1Q, HL1Q et HH1Q. Ces nouvelles valeurs peuvent être stockées dans des emplacements spécifiques. Elles peuvent aussi se substituer aux valeurs de la matrice X pour former une matrice de même taille. La figure 8C illustre un exemple d'un tel placement de valeurs.

La diminution du nombre de valeurs différentes dans cette matrice transformée par rapport à la matrice d'origine permet là encore de réduire l'entropie de Shannon. Selon la formule précédente, l'entropie de Shannon de cette nouvelle matrice transformée est de 4,520.

On va maintenant décrire les étapes de restauration, c'est à dire le processus d'obtention de la matrice restaurée XR représentant la version restaurée de l'image, d'abord selon le procédé de l'invention, puis selon le procédé de l'art antérieur.

On calcule d'abord les matrices de détail dé-quantifiées, à partir des matrices de détail quantifiées, en multipliant leurs valeurs par leur coefficient de quantification respectif, puis par 8, afin d'obtenir le même niveau de précision que lors de la transformée par ondelettes. Ainsi, on obtient les sous-matrices, illustrées à la figure 9C :

- LL2R, dont les valeurs sont égales à celles de la sous-matrice LL2Q, multipliées par 8 ;
- LH2R, HL2R et HH2R, dont les valeurs sont respectivement égales à celles des sous-matrices LH2Q, HL2Q et HH2Q, multipliées par $8 \times Q_{LH2}$, $8 \times Q_{HL2}$ et $8 \times Q_{HH2}$, soit $8 \times Q2$, c'est à dire simplement par 16, chacun des facteurs de quantification de niveau 2 étant égal à Q2, soit 2 ; et,
- LH1R, HL1R et HH1R, dont les valeurs sont respectivement égales à celles des sous-matrices LH1Q, HL1Q et HH1Q, multipliées par $8 \times Q_{LH1}$, $8 \times Q_{HL1}$ et $8 \times Q_{HH1}$, soit $8 \times Q1$, c'est à dire simplement par 32, chacun des facteurs de quantification de niveau 1 étant égal à Q1, soit 4 ; et,

On applique ensuite les ondelettes inverses de niveau 2 aux sous-matrices LL2R, LH2R, HL2R et HH2R afin d'obtenir la sous-matrice LL1R, illustrée à la figure 11C.

On applique ensuite les ondelettes inverses de niveau 1 aux sous-matrices LL1R, LH1R, HL1R et HH1R afin d'obtenir la matrice LL0R illustrée à la figure 13C, les valeurs LL0Rij de cette matrice étant arrondies selon la règle définie plus haut.

On divise ensuite chacune des valeurs LL0Rij de la matrice LL0R par 8, ou bien on décale de 3 digits vers la droite les valeurs binaires correspondantes, et on arrondit chacune des valeurs XRij ainsi obtenue selon la règle définie plus haut. On obtient ainsi, la matrice restaurée XR des valeurs XRij, illustré à la figure 14C. Chaque valeur XRij représente la luminance d'un pixel d'une image restaurée, par un procédé selon l'invention, de l'image d'origine.

Chaque valeur Eij de la matrice E, représentée à la figure 15C, représente les écarts entre les valeurs XRij de la matrice restaurée XR et les valeurs Xij de la matrice d'origine. La moyenne de ces écarts, dans l'exemple illustré, est d'environ 0,78.

Il est également possible de ne restituer que partiellement l'image, en n'effectuant qu'une partie des niveaux de transformations par ondelettes inverse. On peut par exemple ne restituer qu'un quart de l'image en utilisant une matrice restaurée intermédiaire. Une telle matrice de taille 4x4 peut être obtenue en divisant chacune des valeurs LL1RIij de la matrice LL1R illustrée en figure 11C par 8, ou bien en décalant ces valeurs binaires de 3 digits vers la droite. La matrice restaurée intermédiaire ainsi obtenue correspond à une image restaurée réduite.

Cette possibilité de décompression progressive, appelée scalabilité, permet d'avoir un aperçu de l'image lorsque toutes les données ne sont pas disponibles. Ceci peut être avantageusement utilisé lors du téléchargement d'un fichier image lourd, pour décompresser l'image jusqu'au dernier niveau entièrement disponible avant l'arrivée complète de l'image.

Ceci peut aussi permettre de ne décompresser l'image que jusqu'à la résolution nécessaire, par exemple pour afficher une vignette dans une galerie. La décompression partielle permet alors d'économiser des ressources en évitant les niveaux de décompression inutiles.

On va maintenant décrire les étapes de restauration de l'image, à partir de la matrice transformée TZ, dans le procédé de l'art antérieur.

On calcule d'abord les matrices de détail dé-quantifiées, à partir des matrices de détail quantifiées, en multipliant leurs valeurs par leur coefficient de quantification respectif. Ainsi, on obtient les sous-matrices, illustrées à la figure 9B :

- LL2RZ, dont les valeurs sont égales à celles de la sous-matrice LL2QZ, cette matrice n'ayant pas été modifiée par un niveau d'ondelettes;
- LH2RZ, HL2RZ et HH2RZ, dont les valeurs sont respectivement égales à celles des sous-matrices LH2QZ, HL2QZ et HH2QZ, multipliées par leurs facteurs de quantification $Q_{LH2}$, $Q_{HL2}$ et $Q_{HH2}$, soit pour chaque matrice Q2, c'est à dire par 2, le facteur de quantification Q2 de niveau 2 étant égal à 2 ; et,

- LH1RZ, HL1RZ et HH1RZ, dont les valeurs sont respectivement égales à celles des sous-matrices LH1QZ, HL1QZ et HH1QZ, multipliées par leurs facteurs de quantification $Q_{LH1}$, $Q_{HL1}$ et $Q_{HH1}$, soit pour chaque matrice Q1, c'est à dire par 4, le facteur de quantification Q1 de niveau 1 étant égal à 4.

On applique ensuite les ondelettes inverses de niveau 2 aux sous-matrices LL2RZ, LH2RZ, HL2RZ et HH2RZ afin d'obtenir, à l'issue d'une transformée par ondelettes inverse horizontale les sous-matrices L2RZ et H2RZ illustrées en figure 10B, puis, à l'issue d'une transformée par ondelettes inverse verticale des sous-matrices L2RZ et H2RZ, la sous-matrice LL1RZ, illustrée à la figure 11B.

On applique ensuite les ondelettes inverses de niveau 1 aux sous-matrices LL1RZ, LH1RZ, HL1RZ et HH1RZ afin d'obtenir, à l'issue d'une transformée par ondelettes inverse horizontale les sous-matrices L1RZ et H1RZ illustrées en figure 12B, puis, à l'issue d'une transformée par ondelettes inverse verticale des sous-matrices L1RZ et H1RZ, la matrice restaurée XRZ, illustrée à la figure 13B, les valeurs XRZij de cette matrice étant arrondies selon la règle définie plus haut. Chaque valeur XRZij représente la luminance d'un pixel d'une image restaurée, selon le procédé de l'art antérieur, de l'image d'origine.

Chaque valeur EZij de la matrice EZ, représentée à la figure 14B, représente les écarts entre les valeurs XRZij de la matrice restaurée XRZ et les valeurs Xij de la matrice d'origine X. La moyenne de ces écarts, dans l'exemple illustré, est d'environ 1,56. Ainsi, on constate que, pour l'exemple illustré, les écarts obtenus par le procédé de l'art antérieur, sont environ 2 fois plus élevés que ceux obtenus par un procédé selon l'invention (0,78).

Dans le même temps, on constate que l'entropie de la matrice T transformée selon l'invention (4,520) est légèrement inférieure à celle de la matrice TZ transformée selon l'état de l'art antérieur (4,641) et significativement inférieure à celle de la matrice originale (5,625).

Un procédé selon l'invention permet donc de réduire l'entropie d'une matrice tout en obtenant une restitution plus exacte des valeurs de la matrice que par des méthodes de réduction d'entropie utilisées dans l'art antérieur.

Bien sûr, l'invention n'est pas limitée aux exemples qui viennent d'être décrits.

Ainsi, l'image en noir est blanc peut être l'illustration d'une composante R, V ou B d'une image RVB. Chaque composante Y, Cb ou Cr d'une image RVB ayant subi une transformée YCbCr, et principalement la composante de luminance Y, peut aussi être traitée de la même façon que l'image noir et blanc de l'exemple décrit ci-dessus. Elle peut plus généralement représenter n'importe quelle composante d'une image, pouvant également être issue d'un espace CMJN, ou d'une quelconque transformation colorimétrique obtenue à partir des composantes RVB, avec ou sans perte.

De plus, si les ondelettes ont été d'abord appliquées verticalement pour chaque niveau, il est aussi possible de les appliquer, pour chaque niveau, d'abord horizontalement, puis verticalement.

Il est aussi possible que le nombre de digits supplémentaires, c'est-à-dire le nombre de deuximales, utilisés dans le calcul à virgule fixe soit différent lors du calcul des valeurs Tij de la transformée T, de celui utilisé pour restaurer les valeurs XRij à partir de la transformée.

De préférence, le nombre de digit sera plus important si le nombre de niveaux d'ondelettes est plus important.

Dans l'exemple illustré, chacune des valeurs des matrices de détail était simultanément quantifiée et divisée par le coefficient de décalage ; au contraire, la quantification peut ne pas se faire simultanément à la division par le coefficient de décalage. En outre, la quantification et/ou la division par le coefficient de décalage peut se faire à chaque fois qu'une sous-matrice correspondante est obtenue.

Dans l'exemple illustré, la précision de calcul était supérieure à la précision des données d'entrée, qui étaient des nombres entiers. Dans le cas où les données d'entrées ont une précision supérieure à la précision de calcul, en particulier si elles sont issues d'une transformation colorimétrique ayant une précision de calcul supérieure celle des ondelettes, la matrice XD s'obtient en réduisant le nombre de deuximales et non en l'augmentant.

De la même manière, à la décompression, si les données doivent être traitées en sortie avec une précision supérieure à celle de la transformée par ondelettes inverse, par exemple pour une transformation colorimétrique, la précision des données peut être directement augmentée pour être identique à celle de la transformation ultérieure.

Bien sûr, l'invention peut également s'appliquer à des matrices à une ou plusieurs dimensions. Dans ce cas, un niveau d'ondelettes s'obtient par une suite de transformations selon chacune des dimensions.

## Revendications

**1.** Procédé de compression d'une image numérique comprenant une étape pour réduire l'entropie d'une composante de ladite image, représentée sous forme d'une matrice d'origine (X), comprenant :

- la conversion de la matrice d'origine en une matrice courante (XD) pour un premier niveau d'ondelettes d'un ensemble de niveaux d'ondelettes successifs, ladite matrice courante (XD) étant représentée en nombres à virgule fixe en utilisant un premier nombre (D) de digits au moins égal à 1 après la virgule (D2:1) ;

et, pour chaque niveau de l'ensemble de niveaux d'ondelettes successifs :

- la division d'une matrice courante (XD, LL1) en une matrice d'approximation (LL1, LL2) et trois matrices de détail (LH1, HL1, HH1, LH2, HL2, HH2), chacune des matrices de détail étant associée à un coefficient de quantification ($Q_{LH1}$, $Q_{HL1}$, $Q_{HH1}$, $Q_{LH2}$, $Q_{HL2}$, $Q_{HH2}$), chacun des coefficients de quantification des matrices de détail de chacun des niveaux d'ondelettes étant inférieur ou égal au coefficient de la matrice équivalente du niveau précédent, mais toujours supérieur ou égal à 1 ;
- si l'un au moins des coefficients de quantification de chacune des matrices de détail du niveau est strictement supérieur à 1, la quantification des matrices en utilisant le premier nombre (D) de digits après la virgule, et :

  - si le niveau courant est le dernier niveau, la conversion de la matrice d'approximation du niveau courant (LL2) en nombre entiers ;
  - sinon, si le niveau courant n'est pas le dernier niveau :

    - si l'un au moins des coefficients de quantification de chacune des matrices de détail du niveau suivant strictement supérieur à 1, l'utilisation de la matrice d'approximation du niveau (LL1) courant comme matrice courante du niveau suivant ;
    - sinon, si chaque coefficient de quantification de chacune des matrices de détail du niveau suivant est égal à 1, la conversion de la matrice d'approximation du niveau courant (LL2) en nombre entiers, et l'utilisation de la matrice convertie comme matrice courante du niveau suivant.

2. Procédé selon la revendication 1, **caractérisé en ce que** le quantificateur utilisé est un quantificateur scalaire uniforme, c'est-à-dire unique pour chaque matrice quelle que soit la valeur quantifiée.

3. Procédé selon la revendication 1, **caractérisé en ce que**, lorsque la matrice traitée est issue d'une transformation colorimétrique en nombres à virgules fixes avec une précision supérieure au premier nombre de digits (D), les nombres à virgules fixes s'obtiennent en diminuant le nombre de digits pour obtenir ledit premier nombre.

4. Procédé selon l'une des revendications 1 à 3, **caractérisé en ce que** pour calculer une matrice (XR) restaurée, ou une matrice restaurée intermédiaire, à partir de la matrice transformée (T), il comprend une transformation par ondelettes inverse de ladite matrice transformée (T), le calcul de ladite transformé par ondelettes inverse étant effectué en nombre à virgule fixe en utilisant un deuxième nombre de digits au moins égal à 1 après la virgule, au moins pour chaque niveau d'ondelettes pour lequel au moins un des coefficients de quantification de chacune des matrices de détail est strictement supérieur à 1.

5. Procédé selon la revendication 4, **caractérisé en ce que**, lors de la transformation inverse d'un niveau d'ondelettes traité en nombre à virgules fixes, les valeurs d'une matrice sur laquelle la transformation inverse s'applique sont convelties en nombres à virgules fixes, si les valeurs-de ladite matrice sont initialement des nombres entier.

6. Procédé selon l'une des revendications 4 et 5, **caractérisé en ce que**, lors de la transformation inverse d'un niveau d'ondelettes traité en nombres à virgule fixe, les valeurs des matrices de détail sont converties en nombres à virgules fixes et dé-quantifiées avant la transformation en ondelettes inverse.

7. Procédé selon l'une des revendications 4 à 6, **caractérisé en ce que** la matrice restaurée (XR) est obtenue en effectuant les t r ansformations par ondelettes inverses, les dé-quantifications et les conversions entre nombres entiers et virgules fixes sur l'ensemble des niveaux disponibles.

8. Procédé selon l'une des revendications 4 à 7, **caractérisé en ce que**, si le premier niveau d'ondelettes est traité en nombres à virgules fixes, les nombres de la matrice restaurée (XR) obtenue sont des nombres à virgule fixe avec une précision comprenant un nombre de digits égal au deuxième nombre de digits après la virgule.

9. Procédé selon la revendication 8, **caractérisé en ce que**, pour le traitement ultérieur de la matrice restaurée (XR), chacune des valeurs de ladite matrice restaurée est transformée en nombre entier.

10. Procédé selon l'une des revendications 4 à 6, **caractérisé en ce que** la matrice restaurée intermédiaire est obtenue en effectuant les transformations par ondelettes inverses, les dé-quantifications et les conversions entre nombres entiers et virgules fixes sur un nombre de niveaux inférieur au nombre total de niveaux disponibles.

**11.** Procédé selon la revendication 4 à 6 et 10, **caractérisé en ce que**, si le niveau_ d'ondelettes correspondant à la dernière transformation en ondelettes inverse effectuée est traité en nombres à virgules fixes, les nombres de la matrice restaurée intem1édiaire obtenue sont des nombres à virgule fixe avec une précision comprenant un nombre de digits égal au deuxième nombre de digits après la virgule.

**12.** Procédé selon la revendication 11, **caractérisé en ce que**, pour le traitement ultérieur de la matrice restaurée intermédiaire, chacune des valeurs de ladite matrice restaurée est transformée en nombre entier.

**13.** Procédé selon l'une des revendications 10 à 12, **caractérisé en ce que**, si le toutes les données compressées ne sont pas disponibles, on utilise la matrice restaurée intermédiaire avec un nombre de niveaux correspondant aux niveaux dont l'ensemble des données est disponible.

**14.** Procédé selon l'une des revendications 10 à 13, **caractérisé en ce que**, pour une application nécessitant une résolution inférieure à celle de la matrice restaurée (XR), on utilise la matrice intermédiaire avec le nombre de niveau le plus petit permettant d'atteindre au moins ladite résolution inférieure

**15.** Procédé selon l'une des revendications 4 à 14, **caractérisé en ce que**, lorsque la transformée par ondelette inverse est suivie par une transformée colorimétrique inverse en nombres à virgule fixe avec un nombre de digit supérieur à celui utilisé pour la transformée par ondelette inverse, les valeurs de la matrice restaurée sont directement converties en nombres à virgules fixes avec la précision de la transformée.

**16.** Procédé selon l'une des revendications 1 à 14, **caractérisé en ce que** pour réaliser le calcul à virgule fixe de la transformée on décale vers la gauche chaque valeur de la matrice du nombre D de digit.

**17.** Procédé selon l'une des revendications 1 à 15, **caractérisé en ce que** pour réaliser le calcul à virgule fixe de la transformée, on multiplie chaque valeur de la matrice par 10, en base 2, élevé à la puissance D, c'est à dire par: $(10^D)_2$.

**18.** Procédé selon l'une des revendications 1 à 17, **caractérisé en ce que** lorsqu'on a fini les calculs en virgule fixe de la transformée, on décale vers la droite chaque valeur de la matrice du nombre D de digits.

**19.** Procédé selon l'une des revendications 1 à 17, **caractérisé en ce que** lorsqu'on a fini les calculs en virgule fixe de la transformée, on multiplie chaque valeur de la matrice par 10, en base 2, élevé à la puissance -D, c'est à dire par: $(10^{-D})_2$

**20.** Procédé selon l'une des revendications 5 à 19, **caractérisé en ce que** les premier (D) et deuxième nombre de digits sont identiques.

**21.** Procédé selon l'une des revendications 1 à 20, **caractérisé en ce que** la matrice représente, au moins partiellement, une image.

**22.** Procédé selon l'une des revendications 1 à 21, **caractérisé en ce que** la matrice représente l'une des composantes Y, Cb et Cr de l'image.

**23.** Procédé selon l'une des revendications précédentes, **caractérisé en ce que** la transformée par ondelettes est une transformée de Cohen-Daubechies-Feauveau (CDF) 5/3 avec procédé d'élévation.

**Patentansprüche**

**1.** Verfahren zum Komprimieren eines digitalen Bildes, umfassend einen Schritt zum Verringern der Entropie einer Komponente des Bildes, das in Form einer Ursprungsmatrix (X) dargestellt ist, umfassend:

- die Umwandlung der Ursprungsmatrix in eine gängige Matrix (XD) für eine erste Stufe an Wavelets einer Einheit aufeinanderfolgender Stufen von Wavelets, wobei die gängige Matrix (XD) in Zahlen mit Festkomma unter Verwendung einer ersten Anzahl (D) an Stellen mindestens gleich 1 nach dem Komma (D2:1) dargestellt ist; und, für jede Stufe der Einheit aufeinanderfolgender Stufen von Wavelets:

- die Teilung einer gängigen Matrix (XD, LL1) in eine Annäherungsmatrix (LL1, LL2) in drei Detailmatrizes (LH1, HL1, HH1, LH2, HL2, HH2), wobei jede der Detailmatrizes einem Quantisierungskoeffizienten (QLH1, QHL1, QHH1, QLH2, QHL2, QHH2) zugewiesen ist, wobei jeder der Quantisierungskoeffizienten der Detailmatrizes jeder der Stufen an Wavelets kleiner oder gleich dem Koeffizienten der äquivalenten Matrix der vorherigen Stufe, jedoch stets größer oder gleich 1 ist;

- falls mindestens einer der Quantisierungskoeffizienten jeder der Detailmatrizes der Stufe strikt größer als 1 ist, die Quantisierung der Matrizes unter Verwendung der ersten Anzahl (D) an Stellen nach dem Komma, und:

    - falls die aktuelle Stufe die letzte Stufe ist, die Umwandlung der Annäherungsmatrix der aktuellen Stufe (LL2) in ganze Zahlen;

    - ansonsten, falls die aktuelle Stufe nicht die letzte Stufe ist:

        - falls mindestens einer der Quantisierungskoeffizienten jeder der Detailmatrizes der folgenden Stufe strikt größer als 1 ist, die Verwendung der Annäherungsmatrix der aktuellen Stufe (LL1) als aktuelle Matrix der folgenden Stufe;

        - ansonsten, falls jeder Quantisierungskoeffizient jeder der Detailmatrizes der folgenden Stufe gleich 1 ist, die Umwandlung der Annäherungsmatrix der aktuellen Stufe (LL2) in ganze Zahlen, und die Verwendung der umgewandelten Matrix als aktuelle Matrix der folgenden Stufe.

2. Verfahren nach Anspruch 1, **dadurch gekennzeichnet, dass** der verwendete Quantisierer ein einheitlicher skalarer Quantisierer ist, das heißt, unabhängig vom quantisierten Wert für jede Matrix eindeutig.

3. Verfahren nach Anspruch 1, **dadurch gekennzeichnet, dass**, wenn die bearbeitete Matrix aus einer kolorimetrischen Transformation in Zahlen mit Festkommas mit einer Präzision größer als die erste Anzahl an Stellen (D) stammt, die Zahlen mit Festkommas erhalten werden, indem man die Anzahl an Stellen verringert, um die erste Zahl zu erhalten.

4. Verfahren nach einem der Ansprüche 1 bis 3, **dadurch gekennzeichnet, dass** es zum Berechnen einer wiederhergestellten Matrix (XR) oder einer wiederhergestellten Zwischenmatrix aus der transformierten Matrix (T) eine inverse Wavelet-Transformation der transformierten Matrix (T) umfasst, wobei die Berechnung der inversen Wavelet-Transformation in Zahlen mit Festkomma unter Verwendung einer zweiten Anzahl an Stellen mindestens gleich 1 nach dem Komma mindestens für jede Stufe von Wavelets durchgeführt wird, bei der mindestens einer der Quantisierungskoeffizienten jeder der Detailmatrizes strikt größer als 1 ist.

5. Verfahren nach Anspruch 4, **dadurch gekennzeichnet, dass** bei der inversen Transformation einer mit Zahlen mit Festkomma bearbeiteten Stufe an Wavelets die Werte einer Matrix auf die die inverse Transformation angewandt wird, in Zahlen mit Festkomma umgewandelt werden, falls die Werte der Matrix ursprünglich ganze Zahlen sind.

6. Verfahren nach einem der Ansprüche 4 und 5, **dadurch gekennzeichnet, dass** bei der inversen Transformation einer mit Zahlen mit Festkomma bearbeiteten Stufe an Wavelets die Werte der Detailmatrizes in Zahlen mit Festkomma umgewandelt werden, und vor der inversen Wavelet-Transformation entquantisiert wird.

7. Verfahren nach einem der Ansprüche 4 bis 6, **dadurch gekennzeichnet, dass** die wiederhergestellte Matrix (XR) durch Durchführen der inversen Wavelet-Transformationen, der Entquantisierungen und der Umwandlungen zwischen ganzen Zahlen und Festkommas über die Gesamtheit der verfügbaren Stufen erhalten wird.

8. Verfahren nach einem der Ansprüche 4 bis 7, **dadurch gekennzeichnet, dass**, falls die erste Stufe an Wavelets mit Zahlen mit Festkommas bearbeitet wird, die Zahlen der erhaltenen wiederhergestellten Matrix (XR) Zahlen mit Festkomma mit einer Präzision sind, die eine Anzahl an Stellen umfasst, die gleich der zweiten Anzahl an Stellen nach dem Komma ist.

9. Verfahren nach Anspruch 8, **dadurch gekennzeichnet, dass** für die spätere Bearbeitung der wiederhergestellten Matrix (XR), jeder der Werte der wiederhergestellten Matrix in eine ganze Zahl transformiert wird.

10. Verfahren nach einem der Ansprüche 4 bis 6, **dadurch gekennzeichnet, dass** die wiederhergestellte Zwischenmatrix erhalten wird, indem man die inversen Wavelet-Transformationen, die Entquantisierungen, und die Umwandlungen zwischen ganzen Zahlen und Festkommas über eine Anzahl von Stufen durchführt, die kleiner als die Gesamtzahl an verfügbaren Stufen ist.

**11.** Verfahren nach Anspruch 4 bis 6 und 10, **dadurch gekennzeichnet, dass**, falls die Stufe von Wavelets, die der letzten durchgeführten inversen Wavelet-Transformationen entspricht, mit Zahlen mit Festkommas bearbeitet wird, die Zahlen der erhaltenen wiederhergestellten Zwischenmatrix Zahlen mit Festkomma mit einer Präzision sind, die eine Anzahl an Stellen gleich der zweiten Anzahl an Stellen nach dem Komma umfasst.

**12.** Verfahren nach Anspruch 11, **dadurch gekennzeichnet, dass** für die spätere Bearbeitung der wiederhergestellten Zwischenmatrix jeder der Werte der wiederhergestellten Matrix in eine ganze Zahl transformiert wird.

**13.** Verfahren nach einem der Ansprüche 10 bis 12, **dadurch gekennzeichnet, dass**, falls nicht alle komprimierten Daten verfügbar sind, die wiederhergestellte Zwischenmatrix mit einer Anzahl an Stufen verwendet wird, die den Stufen entspricht, bei denen die Gesamtheit der Daten verfügbar sind.

**14.** Verfahren nach einem der Ansprüche 10 bis 13, **dadurch gekennzeichnet, dass** bei einer Anwendung, für die eine geringere Auflösung als jene der wiederhergestellten Matrix (XR) nötig ist, die Zwischenmatrix mit der kleinsten Anzahl an Stufen verwendet wird, die es ermöglicht, mindestens die kleinere Auflösung zu erreichen.

**15.** Verfahren nach einem der Ansprüche 4 bis 14, **dadurch gekennzeichnet, dass**, wenn auf die inverse Wavelet-Transformation eine inverse kolorimetrische Transformation mit Zahlen mit Festkomma mit einer Anzahl an Stellen größer als jener folgt, die für die inverse Wavelet-Transformation verwendet wird, die Werte der wiederhergestellten Matrix direkt in Zahlen mit Festkommas mit der Präzision der Transformation umgewandelt werden.

**16.** Verfahren nach einem der Ansprüche 1 bis 14, **dadurch gekennzeichnet, dass** zum Durchführen der Berechnung mit Festkomma der Transformation jeder Wert der Matrix um die Anzahl D an Stellen nach links verschoben wird.

**17.** Verfahren nach einem der Ansprüche 1 bis 15, **dadurch gekennzeichnet, dass** zum Durchführen der Berechnung mit Festkomma der Transformation jeder Wert der Matrix mit 10, auf Basis 2, erhöht um die Potenz D multipliziert wird, das heißt mit: $(10D)2$.

**18.** Verfahren nach einem der Ansprüche 1 bis 17, **dadurch gekennzeichnet, dass**, wenn die Berechnungen mit Festkomma der Transformation abgeschlossen sind, jeder Wert der Matrix um die Anzahl D an Stellen nach rechts verschoben wird.

**19.** Verfahren nach einem der Ansprüche 1 bis 17, **dadurch gekennzeichnet, dass**, wenn die Berechnungen mit Festkomma der Transformation abgeschlossen sind, jeder Wert der Matrix mit 10, auf Basis 2, erhöht um die Potenz -D multipliziert wird, das heißt mit: $(10-D)2$.

**20.** Verfahren nach einem der Ansprüche 5 bis 19, **dadurch gekennzeichnet, dass** die erste (D) und zweite Anzahl an Stellen identisch sind.

**21.** Verfahren nach einem der Ansprüche 1 bis 20, **dadurch gekennzeichnet, dass** die Matrix mindestens teilweise ein Bild darstellt.

**22.** Verfahren nach einem der Ansprüche 1 bis 21, **dadurch gekennzeichnet, dass** die Matrix eine der Komponenten Y, Cb und Cr des Bildes darstellt.

**23.** Verfahren nach einem der vorstehenden Ansprüche, **dadurch gekennzeichnet, dass** die Wavelet-Transformation eine Cohen-Daubechies-Feauveau (CDF)-5/3-Transformation mit Erhöhungsverfahren ist.

**Claims**

**1.** Method for compressing a digital image comprising a step for reducing the entropy of a component of said image, represented in the form of an original matrix (X), comprising:

- converting the original matrix into a current matrix (XD) for a first wavelet level of a set of successive wavelet levels, said current matrix (XD) being represented in fixed-point numbers by using a first number (D) of digits at least equal to 1 after the point (D2:1);

and, for each level of the set of successive wavelet levels:

- dividing a current matrix (XD, LL1) into an approximation matrix (LL1, LL2) and three detail matrices (LH1, HL1, HH1, LH2, HL2, HH2), each of the detail matrices being associated with a quantisation coefficient ($Q_{LH1}$, $Q_{HL1}$, $Q_{HH1}$, $Q_{LH2}$, $Q_{HL2}$, $Q_{HH2}$), each of the quantisation coefficients of the detail matrices of each of the wavelet levels is less than or equal to the coefficient of the equivalent matrix of the previous level, but always greater than or equal to 1;
- if at least one of the quantisation coefficients of each of the detail matrices of the level is strictly greater than 1, the quantisation of the matrices by using the first number (D) of digits after the point, and:

   - if the current level is the last level, converting the approximation matrix of the current level (LL2) into integer numbers;
   - otherwise, if the current level is not the last level:

      - if at least one of the quantisation coefficients of each of the detail matrices of the following level is strictly greater than 1, using the approximation matrix of the current level (LL1) as the current matrix of the following level;
      - otherwise, if each quantisation coefficient of each of the detail matrices of the following level is equal to 1, converting the approximation matrix of the current level (LL2) into integer numbers, and using the converted matrix as the current matrix of the following level.

2. Method according to claim 1, **characterised in that** the quantiser used is a uniform scalar quantiser, that is to say unique for each matrix whatever the value quantised.

3. Method according to claim 1, **characterised in that**, when the processed matrix results from a colorimetric transformation into fixed-point numbers with a precision greater than the first number of digits (D), the fixed-point numbers are obtained by reducing the number of digits in order to obtain said first number.

4. Method according to one of claims 1 to 3, **characterised in that**, in order to calculate a restored matrix (XR), or an intermediate restored matrix, from the transformed matrix (T), it comprises an inverse wavelet transformation of said transformed matrix (T), the calculation of said inverse wavelet transform being effected in fixed-point numbers by using a second number of digits at least equal to 1 after the point, at least for each wavelet level for which at least one of the quantisation coefficients of each of the detail matrices is strictly greater than 1.

5. Method according to claim 4, **characterised in that**, during the inverse transformation of a wavelet level processed in fixed-point numbers, the values of a matrix to which the inverse transformation is applied are converted into fixed-point numbers, if the values of said matrix are initially integer numbers.

6. Method according to one of claims 4 and 5, **characterised in that**, during the inverse transformation of a wavelet level processed in fixed-point numbers, the values of the detail matrices are converted into fixed-point numbers and dequantised before the inverse wavelet transformation.

7. Method according to one of claims 4 to 6, **characterised in that** the restored matrix (XR) is obtained by effecting the inverse wavelet transformations, the dequantisations and the conversions between integer numbers and fixed points on all the available levels.

8. Method according to one of claims 4 to 7, **characterised in that**, if the first wavelet level is processed in fixed-point numbers, the numbers of the restored matrix (XR) obtained are fixed-point numbers with a precision comprising a number of digits equal to the second number of digits after the point.

9. Method according to claim 8, **characterised in that**, for the subsequent treatment of the restored matrix (XR), each of the values of said restored matrix is transformed into an integer number.

10. Method according to one of claims 4 to 6, **characterised in that** the intermediate restored matrix is obtained by effecting the inverse wavelet transformations, the dequantisations and the conversions between integer numbers and fixed points on a number of levels less than the total number of available levels.

**11.** Method according to claims 4 to 6 and 10, **characterised in that**, if the wavelet level corresponding to the last inverse wavelet transformation formed is processed in fixed-point numbers, the numbers of the intermediate restored matrix obtained are fixed-point numbers with a precision comprising a number of digits equal to the second number of digits after the point.

**12.** Method according to claim 11, **characterised in that**, for the subsequent processing of the intermediate restored matrix, each of the values of said restored matrix is transformed into an integer number.

**13.** Method according to one of claims 10 to 12, **characterised in that**, if not all the compressed data are available, the intermediate restored matrix is used with a number of levels corresponding to the levels of which all the data are available.

**14.** Method according to one of claims 10 to 13, **characterised in that**, for an application requiring a resolution lower than that of the restored matrix (XR), use is made of the intermediate matrix with the smallest number of levels making it possible to achieve at least said lower resolution.

**15.** Method according to one of claims 4 to 14, **characterised in that**, when the inverse wavelet transform is followed by an inverse colorimetric transform in fixed-point numbers with a number of digits greater than that used for the inverse wavelet transform, the values of the restored matrix are directly converted into fixed-point numbers with the precision of the transform.

**16.** Method according to one of claims 1 to 14, **characterised in that**, in order to perform the fixed-point calculation of the transform, each value of the matrix of the number D of digits is shifted towards the left.

**17.** Method according to one of claims 1 to 15, **characterised in that**, in order to perform the fixed-point calculation of the transform, each value of the matrix is multiplied by 10, in base 2, raised to the power of D, that is to say by: $(10^D)_2$.

**18.** Method according to one of claims 1 to 17, **characterised in that**, when the fixed-point calculations of the transform have been finished, each value of the matrix of the number D of digits is shifted to the right.

**19.** Method according to one of claims 1 to 17, **characterised in that**, when the fixed-point calculations of the transform have been finished, each value of the matrix is multiplied by 10, in base 2, raised to the power of -D, that is to say by: $(10^{-D})_2$.

**20.** Method according to one of claims 5 to 19, **characterised in that** the first (D) and second numbers of digits are identical.

**21.** Method according to one of claims 1 to 20, **characterised in that** the matrix at least partially represents an image.

**22.** Method according to one of claims 1 to 21, **characterised in that** the matrix represents one of the Y, Cb and Cr components of the image.

**23.** Method according to one of the preceding claims, **characterised in that** the wavelet transform is a Cohen-Daubechies-Feauveau (CDF) 5/3 transform with lifting scheme.

FIG. 1

EP 3 152 903 B1

Figure 2A

| | x01 | x02 | x03 | x04 | x05 | x06 | x07 | x08 | X |
|---|---|---|---|---|---|---|---|---|---|
| x10 | x11 | x12 | x13 | x14 | x15 | x16 | x17 | x18 | x19 |
| x20 | x21 | x22 | x23 | x24 | x25 | x26 | x27 | x28 | x29 |
| x30 | x31 | x32 | x33 | x34 | x35 | x36 | x37 | x38 | x39 |
| x40 | x41 | x42 | x43 | x44 | x45 | x46 | x47 | x48 | x49 |
| x50 | x51 | x52 | x53 | x54 | x55 | x56 | x57 | x58 | x59 |
| x60 | x61 | x62 | x63 | x64 | x65 | x66 | x67 | x68 | x69 |
| x70 | x71 | x72 | x73 | x74 | x75 | x76 | x77 | x78 | x79 |
| x80 | x81 | x82 | x83 | x84 | x85 | x86 | x87 | x88 | x89 |
| | x91 | x92 | x93 | x94 | x95 | x96 | x97 | x98 | |

Figure 3A

| | L01 | L02 | L03 | L04 | L05 | L06 | L07 | L08 | LZ |
|---|---|---|---|---|---|---|---|---|---|
| L10 | L11 | L12 | L13 | L14 | L15 | L16 | L17 | L18 | L19 |
| L20 | L21 | L22 | L23 | L24 | L25 | L26 | L27 | L28 | L29 |
| L30 | L31 | L32 | L33 | L34 | L35 | L36 | L37 | L38 | L39 |
| L40 | L41 | L42 | L43 | L44 | L45 | L46 | L47 | L48 | L49 |
| | L51 | L52 | L53 | L54 | L55 | L56 | L57 | L58 | |

| | H01 | H02 | H03 | H04 | H05 | H06 | H07 | H08 | HZ |
|---|---|---|---|---|---|---|---|---|---|
| H10 | H11 | H12 | H13 | H14 | H15 | H16 | H17 | H18 | H19 |
| H20 | H21 | H22 | H23 | H24 | H25 | H26 | H27 | H28 | H29 |
| H30 | H31 | H32 | H33 | H34 | H35 | H36 | H37 | H38 | H39 |
| H40 | H41 | H42 | H43 | H44 | H45 | H46 | H47 | H48 | H49 |
| | H51 | H52 | H53 | H54 | H55 | H56 | H57 | H58 | |

Figure 4A

| | LL01 | LL02 | LL03 | LL04 | LL |
|---|---|---|---|---|---|
| LL10 | LL11 | LL12 | LL13 | LL14 | LL15 |
| LL20 | LL21 | LL22 | LL23 | LL24 | LL25 |
| LL30 | LL31 | LL32 | LL33 | LL34 | LL35 |
| LL40 | LL41 | LL42 | LL43 | LL44 | LL45 |
| | LL51 | LL32 | LL33 | LL34 | |

| | LH01 | LH02 | LH03 | LH04 | LH |
|---|---|---|---|---|---|
| LH10 | LH11 | LH12 | LH13 | LH14 | LH15 |
| LH20 | LH21 | LH22 | LH23 | LH24 | LH25 |
| LH30 | LH31 | LH32 | LH33 | LH34 | LH35 |
| LH40 | LH41 | LH42 | LH43 | LH44 | LH45 |
| | LH51 | LH52 | LH53 | LH54 | |

| | HL01 | HL02 | HL03 | HL04 | HL |
|---|---|---|---|---|---|
| HL10 | HL11 | HL12 | HL13 | HL14 | HL15 |
| HL20 | HL21 | HL22 | HL23 | HL24 | HL25 |
| HL30 | HL31 | HL32 | HL33 | HL34 | HL35 |
| HL40 | HL41 | HL42 | HL43 | HL44 | HL45 |
| | LH51 | LH52 | LH53 | LH54 | |

| | HH01 | HH02 | HH03 | HH04 | HH |
|---|---|---|---|---|---|
| HH10 | HH11 | HH12 | HH13 | HH14 | HH15 |
| HH20 | HH21 | HH22 | HH23 | HH24 | HH25 |
| HH30 | HH31 | HH32 | HH33 | HH34 | HH35 |
| HH40 | HH41 | HH42 | HH43 | HH44 | HH45 |
| | HH51 | HH52 | HH53 | HH54 | |

Figure 2B

| | 0 | 0 | 0 | 0 | 0 | 0 | 0 | 0 X | |
|---|---|---|---|---|---|---|---|---|---|
| 0 | 116 | 110 | 72 | 59 | 102 | 179 | 224 | 127 | 224 |
| 0 | 121 | 108 | 59 | 144 | 163 | 149 | 95 | 25 | 95 |
| 0 | 110 | 117 | 159 | 145 | 78 | 69 | 46 | 47 | 46 |
| 0 | 115 | 123 | 147 | 123 | 98 | 75 | 47 | 80 | 47 |
| 0 | 126 | 141 | 127 | 93 | 77 | 50 | 74 | 97 | 74 |
| 0 | 119 | 111 | 91 | 82 | 77 | 79 | 73 | 81 | 73 |
| 0 | 125 | 124 | 81 | 101 | 111 | 82 | 52 | 66 | 52 |
| 0 | 141 | 102 | 65 | 116 | 86 | 57 | 83 | 105 | 83 |
| | 125 | 124 | 81 | 101 | 111 | 82 | 52 | 66 | |

Figure 3B

| | 0 | 0 | 0 | 0 | 0 | 0 | 0 | 0 L1Z | |
|---|---|---|---|---|---|---|---|---|---|
| 0 | 118 | 109 | 58 | 70 | 120 | 185 | 214 | 112 | 214 |
| 0 | 111 | 114 | 146 | 157 | 102 | 79 | 33 | 34 | 33 |
| 0 | 124 | 134 | 125 | 90 | 78 | 57 | 73 | 99 | 73 |
| 0 | 127 | 113 | 74 | 101 | 101 | 79 | 62 | 76 | 62 |
| | 124 | 134 | 125 | 90 | 78 | 57 | 73 | 99 | |

| | 0 | 0 | 0 | 0 | 0 | 0 | 0 | 0 H1Z | |
|---|---|---|---|---|---|---|---|---|---|
| 0 | 8 | -6 | -57 | 42 | 73 | 25 | -40 | -62 | -40 |
| 0 | -3 | -6 | 4 | 4 | 21 | 16 | -13 | 8 | -13 |
| 0 | -7 | -22 | -13 | -15 | -17 | 13 | 10 | -1 | 10 |
| 0 | 16 | -22 | -16 | 15 | -25 | -25 | 31 | 39 | 31 |
| | -7 | -22 | -13 | -15 | -17 | 13 | 10 | -1 | |

Figure 4B

| | 0 | 0 | 0 | 0 LL1Z | |
|---|---|---|---|---|---|
| 0 | 123 | 59 | 120 | 193 | 120 |
| 0 | 107 | 151 | 113 | 36 | 113 |
| 0 | 127 | 125 | 70 | 75 | 70 |
| 0 | 130 | 81 | 104 | 65 | 104 |
| | 127 | 125 | 70 | 75 | |

| | 0 | 0 | 0 | 0 LH1Z | |
|---|---|---|---|---|---|
| 0 | 21 | -19 | 18 | -102 | 18 |
| 0 | -15 | 33 | 12 | 1 | 12 |
| 0 | 10 | -12 | -19 | 26 | -19 |
| 0 | 13 | 14 | -3 | 14 | -3 |
| | 10 | -12 | -19 | 26 | |

| | 0 | 0 | 0 | 0 HL1Z | |
|---|---|---|---|---|---|
| 0 | 13 | -44 | 84 | -43 | 84 |
| 0 | -5 | 0 | 22 | -5 | 22 |
| 0 | -10 | -16 | -13 | 12 | -13 |
| 0 | 11 | -13 | -23 | 26 | -23 |
| | -10 | -16 | -13 | 12 | |

| | 0 | 0 | 0 | 0 HH1Z | |
|---|---|---|---|---|---|
| 0 | 19 | 34 | 9 | -22 | 9 |
| 0 | -7 | -9 | 12 | 21 | 12 |
| 0 | -12 | 0 | 17 | -11 | 17 |
| 0 | -22 | 36 | -28 | 8 | -28 |
| | -12 | 0 | 17 | -11 | |

Figure 5B

L2Z

|   | 0 | 0 | 0 | 0 |   |
|---|---|---|---|---|---|
| 0 | 119 | 74 | 125 | 169 | 125 |
| 0 | 123 | 129 | 83 | 48 | 83 |
|   | 119 | 74 | 125 | 169 |   |

H2Z

|   | 0 | 0 | 0 | 0 |   |
|---|---|---|---|---|---|
| 0 | -18 | 59 | 18 | -98 | 18 |
| 0 | 3 | -44 | 34 | -10 | 34 |
|   | -18 | 59 | 18 | -98 |   |

Figure 6B

LL2Z

|   | 0 | 0 |   |
|---|---|---|---|
| 0 | 107 | 124 | 107 |
| 0 | 130 | 81 | 130 |
|   | 107 | 124 |   |

LH2Z

|   | 0 | 0 |   |
|---|---|---|---|
| 0 | -48 | 44 | -48 |
| 0 | 26 | -35 | 26 |
|   | -48 | 44 |   |

HL2Z

|   | 0 | 0 |   |
|---|---|---|---|
| 0 | -3 | 4 | -3 |
| 0 | -13 | 7 | -13 |
|   | -3 | 4 |   |

HH2Z

|   | 0 | 0 |   |
|---|---|---|---|
| 0 | 59 | -116 | 59 |
| 0 | -63 | -44 | -63 |
|   | 59 | -116 |   |

Figure 7B

LL2QZ

| 107 | 124 |
|---|---|
| 130 | 81 |

LH2QZ

| -24 | 22 |
|---|---|
| 13 | -18 |

LH1QZ

| 5 | -5 | 5 | -26 |
|---|---|---|---|
| -4 | 8 | 3 | 0 |
| 3 | -3 | -5 | 7 |
| 3 | 4 | -1 | 4 |

HL2QZ

| -2 | 2 |
|---|---|
| -7 | 4 |

HH2QZ

| 30 | -58 |
|---|---|
| -32 | -22 |

HL1QZ

| 3 | -11 | 21 | -11 |
|---|---|---|---|
| -1 | 0 | 6 | -1 |
| -3 | -4 | -3 | 3 |
| 3 | -3 | -6 | 7 |

HH1QZ

| 5 | 9 | 2 | -6 |
|---|---|---|---|
| -2 | -2 | 3 | 5 |
| -3 | 0 | 4 | -3 |
| -6 | 9 | -7 | 2 |

Figure 8B

TZ

| 107 | 124 | -24 | 22 | 5 | -5 | 5 | -26 |
|---|---|---|---|---|---|---|---|
| 130 | 81 | 13 | -18 | -4 | 8 | 3 | 0 |
| -2 | 2 | 30 | -58 | 3 | -3 | -5 | 7 |
| -7 | 4 | -32 | -22 | 3 | 4 | -1 | 4 |
| 3 | -11 | 21 | -11 | 5 | 9 | 2 | -6 |
| -1 | 0 | 6 | -1 | -2 | -2 | 3 | 5 |
| -3 | -4 | -3 | 3 | -3 | 0 | 4 | -3 |
| 3 | -3 | -6 | 7 | -6 | 9 | -7 | 2 |

Figure 9B

LL2RZ

| 0 | 107 | 124 | 107 |
|---|-----|-----|-----|
| 0 | 130 | 81 | 130 |
| | 107 | 124 | |

LH2RZ

| 0 | -48 | 44 | -48 |
|---|-----|----|-----|
| 0 | 26 | -36 | 26 |
| | -48 | 44 | |

LH1RZ

| 0 | 20 | -20 | 20 | -104 | 20 |
|---|----|-----|----|------|----|
| 0 | -16 | 32 | 12 | 0 | 12 |
| 0 | 12 | -12 | -20 | 28 | -20 |
| 0 | 12 | 16 | -4 | 16 | -4 |
| | 12 | -12 | -20 | 28 | |

HL2RZ

| 0 | -4 | 4 | -4 |
|---|----|---|----|
| 0 | -14 | 8 | -14 |
| | -4 | 4 | |

HH2RZ

| 0 | 60 | -116 | 60 |
|---|----|------|----|
| 0 | -64 | -44 | -64 |
| | 60 | -116 | |

HL1RZ

| 0 | 12 | -44 | 84 | -44 | 84 |
|---|----|-----|----|-----|----|
| 0 | -4 | 0 | 24 | -4 | 24 |
| 0 | -12 | -16 | -12 | 12 | -12 |
| 0 | 12 | -12 | -24 | 28 | -24 |
| | -12 | -16 | -12 | 12 | |

HH1RZ

| 0 | 20 | 36 | 8 | -24 | 8 |
|---|----|----|---|-----|---|
| 0 | -8 | -8 | 12 | 20 | 12 |
| 0 | -12 | 0 | 16 | -12 | 16 |
| 0 | -24 | 36 | -28 | 8 | -28 |
| | -12 | 0 | 16 | -12 | |

Figure 10B

L2RZ

| 0 | 119 | 74 | 125 | 169 | 125 |
|---|-----|----|-----|-----|-----|
| 0 | 124 | 130 | 84 | 48 | 84 |
| | 119 | 74 | 125 | 169 | |

H2RZ

| 0 | -19 | 60 | 18 | -98 | 18 |
|---|-----|----|----|-----|----|
| 0 | 2 | -46 | 35 | -9 | 35 |
| | -19 | 60 | 18 | -98 | |

Figure 11B

LL1RZ

| 0 | 124 | 59 | 121 | 194 | 121 |
|---|-----|----|-----|-----|-----|
| 0 | 107 | 153 | 114 | 37 | 114 |
| 0 | 128 | 127 | 71 | 75 | 71 |
| 0 | 130 | 81 | 106 | 66 | 106 |
| | 128 | 127 | 71 | 75 | |

Figure 12B

| | | | | | | | | L1RZ |
|---|---|---|---|---|---|---|---|---|
| 0 | 0 | 0 | 0 | 0 | 0 | 0 | 0 | |
| 0 | 119 | 109 | 59 | 70 | 121 | 188 | 215 | 111 | 215 |
| 0 | 111 | 114 | 149 | 158 | 103 | 81 | 34 | 34 | 34 |
| 0 | 125 | 138 | 127 | 91 | 79 | 56 | 73 | 101 | 73 |
| 0 | 127 | 113 | 74 | 105 | 103 | 79 | 63 | 79 | 63 |
| | 125 | 138 | 127 | 91 | 79 | 56 | 73 | 101 | |

| | | | | | | | | H1RZ |
|---|---|---|---|---|---|---|---|---|
| 0 | 0 | 0 | 0 | 0 | 0 | 0 | 0 | |
| 0 | 7 | -6 | -58 | 44 | 73 | 25 | -40 | -64 | -40 |
| 0 | -2 | -7 | 4 | 6 | 23 | 18 | -12 | 8 | -12 |
| 0 | -9 | -23 | -13 | -15 | -16 | 14 | 11 | -1 | 11 |
| 0 | 18 | -23 | -15 | 16 | -26 | -25 | 33 | 41 | 33 |
| | -9 | -23 | -13 | -15 | -16 | 14 | 11 | -1 | |

Figure 13B

| | | | | | | | | XRZ |
|---|---|---|---|---|---|---|---|---|
| 0 | 0 | 0 | 0 | 0 | 0 | 0 | 0 | |
| 0 | 117 | 111 | 74 | 59 | 103 | 182 | 225 | 127 | 225 |
| 0 | 121 | 108 | 61 | 147 | 164 | 151 | 96 | 24 | 96 |
| 0 | 110 | 117 | 163 | 146 | 79 | 70 | 47 | 48 | 47 |
| 0 | 117 | 125 | 150 | 126 | 101 | 77 | 48 | 82 | 48 |
| 0 | 128 | 146 | 129 | 93 | 77 | 48 | 73 | 99 | 73 |
| 0 | 118 | 113 | 92 | 84 | 80 | 79 | 74 | 83 | 74 |
| 0 | 125 | 125 | 81 | 105 | 114 | 82 | 52 | 69 | 52 |
| 0 | 143 | 102 | 66 | 121 | 88 | 57 | 85 | 110 | 85 |
| | 125 | 125 | 81 | 105 | 114 | 82 | 52 | 69 | |

Figure 14B

| | | | | | | | | EZ |
|---|---|---|---|---|---|---|---|
| 1 | 1 | 2 | 0 | 1 | 3 | 1 | 0 |
| 0 | 0 | 2 | 3 | 1 | 2 | 1 | 1 |
| 0 | 0 | 4 | 1 | 1 | 1 | 1 | 1 |
| 2 | 2 | 3 | 3 | 3 | 2 | 1 | 2 |
| 2 | 5 | 2 | 0 | 0 | 2 | 1 | 2 |
| 1 | 2 | 1 | 2 | 3 | 0 | 1 | 2 |
| 0 | 1 | 0 | 4 | 3 | 0 | 0 | 3 |
| 2 | 0 | 1 | -5 | 2 | 0 | 2 | 5 |

Figure 2C

| | 0 | 0 | 0 | 0 | 0 | 0 | 0 | 0 | XD |
|---|---|---|---|---|---|---|---|---|---|
| 0 | 928 | 880 | 576 | 472 | 816 | 1432 | 1792 | 1016 | 1792 |
| 0 | 968 | 864 | 472 | 1152 | 1304 | 1192 | 760 | 200 | 760 |
| 0 | 880 | 936 | 1272 | 1160 | 624 | 552 | 368 | 376 | 368 |
| 0 | 920 | 984 | 1176 | 984 | 784 | 600 | 376 | 640 | 376 |
| 0 | 1008 | 1128 | 1016 | 744 | 616 | 400 | 592 | 776 | 592 |
| 0 | 952 | 888 | 728 | 656 | 616 | 632 | 584 | 648 | 584 |
| 0 | 1000 | 992 | 648 | 808 | 888 | 656 | 416 | 528 | 416 |
| 0 | 1128 | 816 | 520 | 928 | 688 | 456 | 664 | 840 | 664 |
| | 1000 | 992 | 648 | 808 | 888 | 656 | 416 | 528 | |

Figure 3C

| | 0 | 0 | 0 | 0 | 0 | 0 | 0 | 0 | L1 |
|---|---|---|---|---|---|---|---|---|---|
| 0 | 944 | 869 | 463 | 556 | 962 | 1482 | 1712 | 892 | 1712 |
| 0 | 890 | 913 | 1167 | 1252 | 811 | 633 | 262 | 268 | 262 |
| 0 | 989 | 1073 | 998 | 722 | 623 | 457 | 586 | 791 | 586 |
| 0 | 1019 | 905 | 590 | 808 | 804 | 632 | 498 | 605 | 498 |
| | 989 | 1073 | 998 | 722 | 623 | 457 | 586 | 791 | |

| | 0 | 0 | 0 | 0 | 0 | 0 | 0 | 0 | H1 |
|---|---|---|---|---|---|---|---|---|---|
| 0 | 64 | -44 | -452 | 336 | 584 | 200 | -320 | -496 | -320 |
| 0 | -24 | -48 | 32 | 32 | 164 | 124 | -104 | 64 | -104 |
| 0 | -52 | -172 | -104 | -120 | -136 | 104 | 80 | -4 | 80 |
| 0 | 128 | -176 | -128 | 120 | -200 | -200 | 248 | 312 | 248 |
| | -52 | -172 | -104 | -120 | -136 | 104 | 80 | -4 | |

Figure 4C

| | 0 | 0 | 0 | 0 | LL1 |
|---|---|---|---|---|---|
| 0 | 986 | 465 | 959 | 1543 | 959 |
| 0 | 861 | 1204 | 901 | 288 | 901 |
| 0 | 1009 | 996 | 564 | 600 | 564 |
| 0 | 1044 | 643 | 827 | 520 | 827 |
| | 1009 | 996 | 564 | 600 | |

| | 0 | 0 | 0 | 0 | LH1 |
|---|---|---|---|---|---|
| 0 | 166 | -157 | 145 | -820 | 145 |
| 0 | -116 | 263 | 97 | 6 | 97 |
| 0 | 80 | -89 | -148 | 205 | -148 |
| 0 | 101 | 111 | -19 | 107 | -19 |
| | 80 | -89 | -148 | 205 | |

| | 0 | 0 | 0 | 0 | HL1 |
|---|---|---|---|---|---|
| 0 | 102 | -347 | 669 | -347 | 669 |
| 0 | -37 | 3 | 171 | -39 | 171 |
| 0 | -76 | -128 | -103 | 92 | -103 |
| 0 | 84 | -101 | -185 | 208 | -185 |
| | -76 | -128 | -103 | 92 | |

| | 0 | 0 | 0 | 0 | HH1 |
|---|---|---|---|---|---|
| 0 | 150 | 270 | 68 | -176 | 68 |
| 0 | -52 | -66 | 94 | 168 | 94 |
| 0 | -94 | 0 | 132 | -84 | 132 |
| 0 | -176 | 284 | -224 | 64 | -224 |
| | -94 | 0 | 132 | -84 | |

Figure 5C

| | | 0 | 0 | 0 | 0 | L2 |
|---|---|---|---|---|---|---|
| 0 | | 952 | 584 | 994 | 1347 | 994 |
| 0 | | 984 | 1026 | 665 | 384 | 665 |
| | | 952 | 584 | 994 | 1347 | |

| | | 0 | 0 | 0 | 0 | H2 |
|---|---|---|---|---|---|---|
| 0 | | -137 | 474 | 140 | -784 | 140 |
| 0 | | 35 | -353 | 263 | -80 | 263 |
| | | -137 | 474 | 140 | -784 | |

Figure 6C

| | | 0 | 0 | LL2 |
|---|---|---|---|---|
| 0 | | 855 | 985 | 855 |
| 0 | | 1035 | 645 | 1035 |
| | | 855 | 985 | |

| | | 0 | 0 | LH2 |
|---|---|---|---|---|
| 0 | | -389 | 353 | -389 |
| 0 | | 202 | -281 | 202 |
| | | -389 | 353 | |

| | | 0 | 0 | HL2 |
|---|---|---|---|---|
| 0 | | -19 | 27 | -19 |
| 0 | | -91 | 52 | -91 |
| | | -19 | 27 | |

| | | 0 | 0 | HH2 |
|---|---|---|---|---|
| 0 | | 473 | -924 | 473 |
| 0 | | -502 | -343 | -502 |
| | | 473 | -924 | |

Figure 7C

LL2Q

| 107 | 123 |
|---|---|
| 129 | 81 |

LH2Q

| -24 | 22 |
|---|---|
| 13 | -18 |

LH1Q

| 5 | -5 | 5 | -26 |
|---|---|---|---|
| -4 | 8 | 3 | 0 |
| 3 | -3 | -5 | 6 |
| 3 | 3 | -1 | 3 |

HL2Q

| -1 | 2 |
|---|---|
| -6 | 3 |

HH2Q

| 30 | -58 |
|---|---|
| -31 | -21 |

HL1Q

| 3 | -11 | 21 | -11 |
|---|---|---|---|
| -1 | 0 | 5 | -1 |
| -2 | -4 | -3 | 3 |
| 3 | -3 | -6 | 7 |

HH1Q

| 5 | 8 | 2 | -6 |
|---|---|---|---|
| -2 | -2 | 3 | 5 |
| -3 | 0 | 4 | -3 |
| -6 | 9 | -7 | 2 |

Figure 8C

T

| 107 | 123 | -24 | 22 | 5 | -5 | 5 | -26 |
|---|---|---|---|---|---|---|---|
| 129 | 81 | 13 | -18 | -4 | 8 | 3 | 0 |
| -1 | 2 | 30 | -58 | 3 | -3 | -5 | 6 |
| -6 | 3 | -31 | -21 | 3 | 3 | -1 | 3 |
| 3 | -11 | 21 | -11 | 5 | 8 | 2 | -6 |
| -1 | 0 | 5 | -1 | -2 | -2 | 3 | 5 |
| -2 | -4 | -3 | 3 | -3 | 0 | 4 | -3 |
| 3 | -3 | -6 | 7 | -6 | 9 | -7 | 2 |

Figure 9C

LL2R
|   | 0 | 0 |     |
|---|---|---|-----|
| 0 | 856 | 984 | 856 |
| 0 | 1032 | 648 | 1032 |
|   | 856 | 984 |     |

LH2R
|   | 0 | 0 |     |
|---|---|---|-----|
| 0 | -384 | 352 | -384 |
| 0 | 208 | -288 | 208 |
|   | -384 | 352 |     |

LH1R
|   | 0 | 0 | 0 | 0 |     |
|---|---|---|---|---|-----|
| 0 | 160 | -160 | 160 | -832 | 160 |
| 0 | -128 | 256 | 96 | 0 | 96 |
| 0 | 96 | -96 | -160 | 192 | -160 |
| 0 | 96 | 96 | -32 | 96 | -32 |
|   | 96 | -96 | -160 | 192 |     |

HL2R
|   | 0 | 0 |     |
|---|---|---|-----|
| 0 | -16 | 32 | -16 |
| 0 | -96 | 48 | -96 |
|   | -16 | 32 |     |

HH2R
|   | 0 | 0 |     |
|---|---|---|-----|
| 0 | 480 | -928 | 480 |
| 0 | -496 | -336 | -496 |
|   | 480 | -928 |     |

HL1R
|   | 0 | 0 | 0 | 0 |     |
|---|---|---|---|---|-----|
| 0 | 96 | -352 | 672 | -352 | 672 |
| 0 | -32 | 0 | 160 | -32 | 160 |
| 0 | -64 | -128 | -96 | 96 | -96 |
| 0 | 96 | -96 | -192 | 224 | -192 |
|   | -64 | -128 | -96 | 96 |     |

HH1R
|   | 0 | 0 | 0 | 0 |     |
|---|---|---|---|---|-----|
| 0 | 160 | 256 | 64 | -192 | 64 |
| 0 | -64 | -64 | 96 | 160 | 96 |
| 0 | -96 | 0 | 128 | -96 | 128 |
| 0 | -192 | 288 | -224 | 64 | -224 |
|   | -96 | 0 | 128 | -96 |     |

Figure 10C

L2R
|   | 0 | 0 | 0 | 0 |     |
|---|---|---|---|---|-----|
| 0 | 952 | 588 | 992 | 1344 | 992 |
| 0 | 980 | 1032 | 668 | 380 | 668 |
|   | 952 | 588 | 992 | 1344 |     |

H2R
|   | 0 | 0 | 0 | 0 |     |
|---|---|---|---|---|-----|
| 0 | -136 | 484 | 144 | -784 | 144 |
| 0 | 28 | -354 | 256 | -80 | 256 |
|   | -136 | 484 | 144 | -784 |     |

Figure 11C

LL1R
|   | 0 | 0 | 0 | 0 |     |
|---|---|---|---|---|-----|
| 0 | 986 | 467 | 956 | 1540 | 956 |
| 0 | 861 | 1218 | 906 | 284 | 906 |
| 0 | 1007 | 1000 | 568 | 596 | 568 |
| 0 | 1035 | 646 | 824 | 516 | 824 |
|   | 1007 | 1000 | 568 | 596 |     |

## Figure 12C

| | 0 | 0 | 0 | 0 | 0 | 0 | 0 | 0 | L1R |
|---|---|---|---|---|---|---|---|---|---|
| 0 | 946 | 867 | 467 | 552 | 956 | 1492 | 1708 | 876 | 1708 |
| 0 | 893 | 912 | 1186 | 1258 | 818 | 635 | 260 | 260 | 260 |
| 0 | 983 | 1088 | 1000 | 720 | 632 | 450 | 588 | 780 | 588 |
| 0 | 1011 | 901 | 598 | 799 | 808 | 622 | 500 | 596 | 500 |
| | 983 | 1088 | 1000 | 720 | 632 | 450 | 588 | 780 | |

| | 0 | 0 | 0 | 0 | 0 | 0 | 0 | 0 | H1R |
|---|---|---|---|---|---|---|---|---|---|
| 0 | 56 | -40 | -456 | 324 | 592 | 200 | -320 | -512 | -320 |
| 0 | -16 | -56 | 32 | 28 | 152 | 124 | -96 | 64 | -96 |
| 0 | -40 | -168 | -104 | -116 | -128 | 108 | 88 | -8 | 88 |
| 0 | 144 | -180 | -120 | 124 | -208 | -196 | 264 | 328 | 264 |
| | -40 | -168 | -104 | -116 | -128 | 108 | 88 | -8 | |

## Figure 13C

| | 0 | 0 | 0 | 0 | 0 | 0 | 0 | 0 | LL0R |
|---|---|---|---|---|---|---|---|---|---|
| 0 | 932 | 877 | 581 | 471 | 808 | 1442 | 1788 | 1004 | 1788 |
| 0 | 964 | 867 | 481 | 1145 | 1312 | 1198 | 756 | 176 | 756 |
| 0 | 883 | 936 | 1292 | 1170 | 632 | 554 | 364 | 372 | 364 |
| 0 | 924 | 984 | 1187 | 984 | 781 | 597 | 381 | 633 | 381 |
| 0 | 997 | 1144 | 1018 | 742 | 626 | 392 | 590 | 766 | 590 |
| 0 | 951 | 898 | 732 | 654 | 631 | 626 | 589 | 633 | 589 |
| 0 | 985 | 988 | 654 | 797 | 892 | 644 | 412 | 516 | 412 |
| 0 | 1129 | 808 | 534 | 921 | 684 | 448 | 676 | 844 | 676 |
| | 985 | 988 | 654 | 797 | 892 | 644 | 412 | 516 | |

## Figure 14C

XR

| 117 | 110 | 73 | 59 | 101 | 180 | 224 | 126 |
|---|---|---|---|---|---|---|---|
| 121 | 108 | 60 | 143 | 164 | 150 | 95 | 22 |
| 110 | 117 | 162 | 146 | 79 | 69 | 46 | 47 |
| 116 | 123 | 148 | 123 | 98 | 75 | 48 | 79 |
| 125 | 143 | 127 | 93 | 78 | 49 | 74 | 96 |
| 119 | 112 | 92 | 82 | 79 | 78 | 74 | 79 |
| 123 | 124 | 82 | 100 | 112 | 81 | 52 | 65 |
| 141 | 101 | 67 | 115 | 86 | 56 | 85 | 106 |

## Figure 15C

E

| 1 | 0 | 1 | 0 | 1 | 1 | 0 | 1 |
|---|---|---|---|---|---|---|---|
| 0 | 0 | 1 | 1 | 1 | 1 | 0 | 3 |
| 0 | 0 | 3 | 1 | 1 | 0 | 0 | 0 |
| 1 | 0 | 1 | 0 | 0 | 0 | 1 | 1 |
| 1 | 2 | 0 | 0 | 1 | 1 | 0 | 1 |
| 0 | 1 | 1 | 0 | 2 | 1 | 1 | 2 |
| 2 | 0 | 1 | 1 | 1 | 1 | 0 | 1 |
| 0 | 1 | 2 | 1 | 0 | 1 | 2 | 1 |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Low complexity embedded compression algorithm for reduction of memory size and bandwidth requirements in the JPEG2000 encoder. **CHANG-HOON SON et al.** IEEE TRANSACTIONS ON CONSUMER ELECTRONICS. IEEE SERVICE CENTER, 01 Novembre 2010, vol. 56, 2421-2429